# EUROPÄISCHE PATENTSCHRIFT

(11) **EP 3 039 761 B1**
(45) Veröffentlichungstag und Bekanntmachung des Hinweises auf die Patenterteilung: **30.01.2019**
(21) Anmeldenummer: 14744113.3
(22) Anmeldetag: 28.07.2014
(51) Int. Cl.: B60R 16/03, H02P 9/14, H02P 29/024, H02P 25/22, H02M 1/084, H02M 1/32, H02M 7/219, H02M 7/217, H02P 9/00

(54) **ÜBERSPANNUNGSSCHUTZ FÜR AKTIVE GLEICHRICHTER BEI LASTABWURF**
SURGE PROTECTION FOR ACTIVE RECTIFIERS IN THE EVENT OF LOAD SHEDDING
PROTECTION CONTRE LA SURTENSION POUR REDRESSEURS ACTIFS EN CAS DE SUPPRESSION DE CHARGE

(30) Priorität: 27.08.2013 DE 102013217023; 06.09.2013 DE 102013217896
(43) Veröffentlichungstag der Anmeldung: 06.07.2016
(73) Patentinhaber: SEG Automotive Germany GmbH, 70499 Stuttgart (DE)
(72) Erfinder: SCHUELER, Harald, 71522 Backnang (DE); SAUTTER, Siegbert, 70499 Stuttgart (DE); OTTE, Christopher, 72762 Reutlingen (DE); MEHRINGER, Paul, 70569 Stuttgart (DE); GE, Jie, 70499 Stuttgart-Hausen (DE); FEILER, Wolfgang, 72770 Reutlingen (DE); SCHMIDT, Matthias, 70197 Stuttgart (DE)
(74) Vertreter: Steinbauer, Florian
(86) Internationale Anmeldenummer: PCT/EP2014/066134
(87) Internationale Veröffentlichungsnummer: WO 2015/028222

(56) Entgegenhaltungen:
- EP-A2- 0 777 309

## Beschreibung

Die vorliegende Erfindung betrifft ein Gleichrichtermodul für einen aktiven Brückengleichrichter mit Mitteln zum Schutz vor Überspannungen bei Lastabwurf, einen aktiven Brückengleichrichter mit entsprechenden Gleichrichtermodulen, eine Generatoranordnung mit einem derartigen Brückengleichrichter, ein entsprechendes Kraftfahrzeugbordnetz, ein zugehöriges Betriebsverfahren und Mittel zur Implementierung dieses Betriebsverfahrens.

### Stand der Technik

Zur Speisung von Gleichstromsystemen aus Drehstromsystemen können Gleichrichter unterschiedlicher Bauart eingesetzt werden. In Kraftfahrzeugbordnetzen werden in Entsprechung zu den dort üblicherweise verbauten dreiphasigen Drehstromgeneratoren häufig Brückengleichrichter in sechspulsiger Ausführung verwendet. Die Erfindung eignet sich jedoch in gleicher Weise für Brückengleichrichter für andere Phasenzahlen, z.B. für vier- oder fünfphasige Generatoren.
Ein kritischer Betriebsfall bei Brückengleichrichtern ist der Lastabwurf (engl. Load Dump). Dieser tritt dann auf, wenn sich bei hoch erregtem Generator und einem entsprechend hohen abgegebenen Strom die Last am Generator bzw. dem damit verbundenen Brückengleichrichter (z.B. durch Abschalten von Verbrauchern) schlagartig verringert und dies nicht durch kapazitiv wirkende Elemente im Gleichspannungsnetz (z.B. die Batterie im Kraftfahrzeugbordnetz) abgefangen werden kann. Hierbei könnte aufgrund der nicht abgeführten Energie im Generator im Extremfall bis zu einer Dauer von ca. 300 bis 500 ms eine hohe Spannung über den mit dem Generator verbundenen Brückengleichrichter ins Kraftfahrzeugbordnetz geliefert werden. Diese muss daher in der Regel im Brückengleichrichter abgefangen werden können, um elektrische Komponenten im Kraftfahrzeugbordnetz vor Überspannungsschäden zu schützen. Dies erfolgt bei passiven Brückengleichrichtern durch die dort verbauten Gleichrichter-Zenerdioden, in denen die Überspannung geklammert und die überschüssige Energie in Wärme umgesetzt werden kann.

Wie beispielsweise in der DE 10 2009 046 955 A1 erläutert, ist jedoch in Kraftfahrzeugen der Einsatz von aktiven Brückengleichrichtern wünschenswert, unter anderem deshalb, weil diese im Gegensatz zu passiven bzw. ungesteuerten Brückengleichrichtern geringere Verlustleistungen aufweisen. Derzeit erhältliche ansteuerbare bzw. aktive Schaltelemente für solche aktiven Brückengleichrichter, beispielsweise MOSFET, haben keine integrierte Klammerfunktion mit einer ausreichenden Robustheit und können die Überspannung nicht abfangen. Daher sind in aktiven Brückengleichrichtern zusätzliche Schutzstrategien erforderlich.

Bei einem Lastabwurf können beispielsweise die Generatorphasen kurzgeschlossen werden, indem alle Schaltelemente des oberen oder unteren Gleichrichterzweigs kurzzeitig leitend geschaltet werden, wie beispielsweise auch in der DE 198 35 316 A1 offenbart und in der DE 10 2009 046 955 A1 diskutiert. Dies erfolgt insbesondere auf Grundlage einer Auswertung der an den Gleichspannungsanschlüssen des aktiven Brückengleichrichters anliegenden Ausgangsspannung. Überschreitet diese einen vorgegebenen oberen Schwellwert, wird ein entsprechender Kurzschluss eingeleitet und die Ausgangsspannung sinkt. Unterschreitet die Ausgangsspannung dadurch einen vorgegebenen unteren Schwellwert, wird der Kurzschluss aufgehoben und die Ausgangsspannung steigt erneut an. Es handelt sich somit um ein typisches Hystereseverhalten. Die Ausgangsspannung pendelt daher bei einem Lastabwurf im Wesentlichen zwischen dem oberen und dem unteren Schwellwert.

Probleme können sich hier in sogenannten dezentral aufgebauten aktiven Brückengleichrichtern ergeben, bei denen die einzelnen Halbbrücken jeweils eigenständige Ansteuerschaltungen aufweisen, die jeweils individuell die Ausgangsspannung erfassen. Solche Halbbrücken mit eigenständigen Ansteuerschaltungen werden im Rahmen dieser Anmeldung auch als Gleichrichtermodule oder Phasenmodule bezeichnet. Da in diesen Ansteuerschaltungen gewisse Toleranzen unvermeidlich sind, kann es zu einem unterschiedlichen Schaltverhalten in den einzelnen Halbbrücken kommen, wie unten erläutert. Dies betrifft insbesondere Ansteuerschaltungen, die mittels anwendungsspezifischer integrierter Schaltungen (engl. application specific integrated circuits, ASIC) realisiert sind. Durch das unterschiedliche Schaltverhalten können einzelne Schaltelemente im aktiven Brückengleichrichter deutlich überlastet werden, was zu thermischer Zerstörung der entsprechenden Schaltelemente und einem Ausfall führen kann.
Es besteht daher der Bedarf nach verbesserten Schutzstrategien für aktive Brückengleichrichter bei Lastabwurf.

EP 0 777 309 A2 offenbart ein Gleichrichtermodul für einen aktiven Brückengleichrichter, das zwei zwischen zwei Endanschlüsse in Reihe geschaltete Schaltelemente, zwischen denen ein Mittelabgriff ausgebildet ist, sowie eine Ansteuerschaltung mit einer Überwachungseinheit, einer Synchronisationseinheit und einer Ansteuereinheit umfasst, wobei
- die Überwachungseinheit dafür eingerichtet ist, eine Messspannung zu erfassen und ein Anforderungssignal auszugeben, wenn die Messspannung einen oberen Schwellwert überschreitet
- die Synchronisationseinheit dafür eingerichtet ist, an einem Synchronisationsanschluss ein Synchronisationssignal auszugeben, solange die Überwachungseinheit das Anforderungssignal ausgibt, und
- die Ansteuereinheit dafür eingerichtet ist, eines der zwei Schaltelemente während eines Ansteuerzeitraums zumindest abschnittsweise leitend zu schalten, wenn die Überwachungseinheit das Anforderungssignal ausgibt und/ oder wenn durch die Überwachung des Synchronisationsanschlusses das Synchronisationssignal detektiert und optional als gültig erkannt wird.

### Offenbarung der Erfindung

Vor diesem Hintergrund schlägt die vorliegende Erfindung ein Gleichrichtermodul für einen aktiven Brückengleichrichter mit Mitteln zum Schutz vor Überspannungen bei Lastabwurf, einen aktiven Brückengleichrichter mit entsprechenden Gleichrichtermodulen, eine Generatoranordnung mit einem derartigen Brückengleichrichter, ein entsprechendes Kraftfahrzeugbordnetz, ein zugehöriges Betriebsverfahren und Mittel zur Implementierung dieses Betriebsverfahrens mit den Merkmalen der unabhängigen Patentansprüche vor.

### Vorteile der Erfindung

Die vorliegende Erfindung betrifft, wie erwähnt, den Betrieb einer Generatoranordnung mit einem aktiven Brückengleichrichter bei Lastabwurf. Wie erläutert, kann ein derartiger Betrieb umfassen, die Generatorphasen bzw. die diesen entsprechenden Wechselspannungsanschlüsse des aktiven Brückengleichrichters durch gleichzeitiges Ansteuern (und damit gleichzeitiges Durchschalten) entweder aller unteren oder aller oberen ansteuerbaren bzw. aktiven Schaltelemente eines Gleichrichterzweigs leitend miteinander zu verbinden (kurzzuschließen) und entsprechende Kurzschlüsse wiederum gleichzeitig wieder aufzuheben. Es werden also Phasenkurzschlüsse herbeigeführt bzw. aufgehoben.

Auch in den erwähnten, dezentral aufgebauten aktiven Brückengleichrichtern, bei denen die einzelnen Halbbrücken jeweils eigenständige Ansteuerschaltungen aufweisen, die jeweils individuell die an den Gleichspannungsanschlüssen des aktiven Brückengleichrichters anliegende Ausgangsspannung erfassen, wird ein derartiger Betrieb angestrebt, im Stand der Technik jedoch aufgrund der eingangs erläuterten Toleranzen bei der Spannungserkennung und/oder in nachgeordneten Elementen der Ansteuerschaltungen nicht immer erreicht. Die erfindungsgemäßen Maßnahmen ermöglichen hingegen einen derartigen Betrieb.

Aufgrund der erwähnten Toleranzen kann es dazu kommen, dass die Ansteuerschaltung einer Halbbrücke erst bei einem höheren Spannungswert der Ausgangsspannung in den leitenden Zustand schaltet als alle anderen Halbbrücken. Es ergibt sich damit in dieser Ansteuerschaltung effektiv ein höherer oberer Schwellwert trotz identischer Vorgabe in allen Halbbrücken.

Entsprechendes gilt auch für den unteren Schwellwert, d.h. die Ansteuerschaltung einer Halbbrücke nimmt erst bei einem niedrigeren Spannungswert der Ausgangsspannung als die aller anderen Halbbrücken den normalen Betrieb wieder auf und besitzt damit trotz identischer Vorgabe in allen Halbbrücken effektiv einen niedrigeren unteren Schwellwert.

Als besonders kritisch erweist sich der zuletzt erläuterte Fall. Weil die Ansteuerschaltungen aller anderen Halbbrücken den normalen Betrieb vor der Ansteuerschaltung mit dem effektiv niedrigeren Schwellwert wieder aufnehmen, steigt die Ausgangsspannung wieder an. Es kann daher dazu kommen, dass die Ansteuerschaltung mit dem effektiv niedrigsten Schwellwert nie eine Ausgangsspannung unterhalb dieses effektiv niedrigsten Schwellwerts erfasst. Das entsprechend angesteuerte Schaltelement bleibt damit dauerhaft leitend geschaltet.

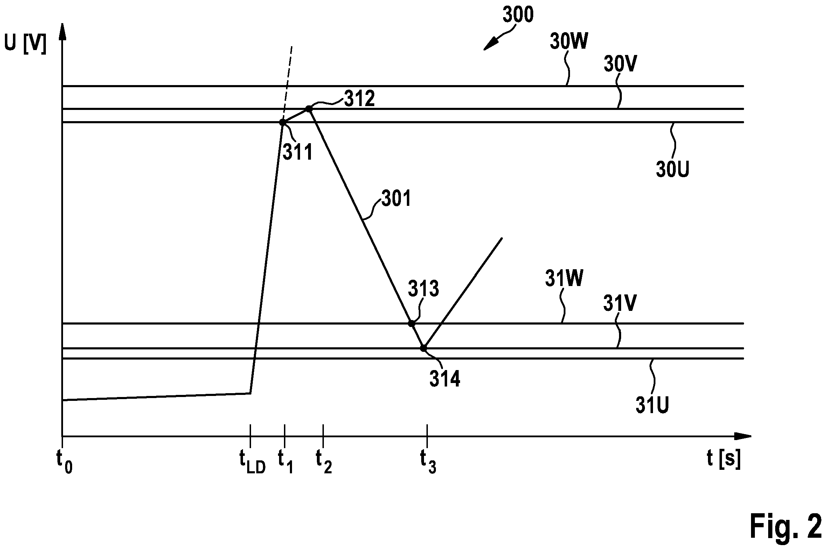

Unter Umständen nehmen also einzelne Phasen die normale Gleichrichtung wieder auf, während andere dauerhaft im leitenden Zustand verharren. Andere kommen ggf. nie in den dauerhaft leitenden Zustand. Dieses Verhalten führt zu einer Asymmetrie der sich ergebenden Phasenströme, wie in der unten erläuterten Figur 2 veranschaulicht. Aufgrund dieser können einzelne Schaltelemente im Gleichrichter deutlich überlastet werden, was zu thermischer Zerstörung der entsprechenden Schaltelemente führen kann. Ein frühzeitiger Ausfall des aktiven Brückengleichrichters oder eine nicht ausreichende Begrenzung der durch den Lastabwurf bewirkten Überspannungen ist damit möglich.

Ein aktiver Brückengleichrichter weist, wie allgemein bekannt, Halbbrücken auf, die mit ihren jeweiligen Schaltelementen einen oberen und einen unteren bzw. Highside- und Lowside- Gleichrichterzweig definieren. Mittels der im oberen bzw. Highside-Gleichrichterzweig angeordneten Schaltelemente kann jeweils eine Verbindung eines oder mehrerer Wechselspannungsanschlüsse mit einem positiven Gleichspannungsanschluss und mittels der im unteren bzw. Lowside-Gleichrichterzweig angeordneten Schaltelemente eine Verbindung eines oder mehrerer Wechselspannungsanschlüsse mit einem negativen Gleichspannungsanschluss hergestellt werden. Jede Halbbrücke weist also zwei zwischen den zwei Gleichspannungsanschlüssen in Reihe geschaltete und ansteuerbare Schaltelemente auf, zwischen denen jeweils einer der Wechselspannungsanschlüsse angeschlossen ist.

Mittels der Wechselspannungsanschlüsse ist der aktive Brückengleichrichter mit einer entsprechenden Anzahl an Generatorphasen verbunden, die Gleichspannungsanschlüsse versorgen ein Gleichspannungsbordnetz. Der positive Gleichspannungsanschluss wird auch mit B+ bezeichnet. Der negative Gleichspannungsanschluss, auch mit B- bezeichnet, kann insbesondere auf Masse liegen. An den Gleichspannungsanschlüssen liegt beim gleichrichtenden Betrieb des aktiven Brückengleichrichters eine Ausgangsspannung an, die der Bordnetzspannung eines angeschlossenen Bordnetzes entsprechen kann. Es versteht sich, dass entsprechende aktive Brückengleichrichter auch wechselrichtend betrieben werden können, beispielsweise in Hybridfahrzeugen. Derartige Betriebsphasen werden hier nicht betrachtet. Jedoch versteht sich, dass, wenn im Rahmen dieser Anmeldung von einem Generator die Rede ist, es sich hierbei auch um eine sowohl generatorisch als auch motorisch betreibbare elektrische Maschine handeln kann. Entsprechendes gilt auch für den aktiven Gleichrichter, der in entsprechenden Betriebsphasen auch wechselrichtend betreibbar sein kann.

Die Erfindung betrifft dabei, wie zuvor erwähnt, einen sogenannten dezentralen Brückengleichrichter, bei dem jede Halbbrücke eine Ansteuerschaltung umfasst. Hierdurch wird jeweils ein Gleichrichtermodul für einen aktiven Brückengleichrichter gebildet, das zwei zwischen zwei Endanschlüssen in Reihe geschaltete Schaltelemente, zwischen denen ein Mittelabgriff ausgebildet ist, aufweist. Die zwei Endanschlüsse entsprechen im verbauten Zustand des Gleichrichtermoduls den Gleichspannungsanschlüssen des aktiven Brückengleichrichters, der Mittelabgriff entspricht einem der Wechselspannungsanschlüsse. Die nachfolgenden Erläuterungen betreffen dabei beispielsweise einen aktiven Brückengleichrichter, der aus entsprechenden Gleichrichtermodulen aufgebaut ist, so dass die Ausführungen bezüglich der Wechselspannungsanschlüsse auch die Endanschlüsse der Gleichrichtermodule und die Ausführungen bezüglich der Wechselspannungsanschlüsse auch die Mittelabgriffe der Gleichrichtermodule betreffen können. Die Ansteuerschaltung umfasst erfindungsgemäß eine Überwachungseinheit, eine Synchronisationseinheit und eine Ansteuereinheit und ist als Schutzschaltung zum Schutz eines Bordnetzes bei Lastabwurf ausgebildet.

Die Überwachungseinheit ist erfindungsgemäß dafür eingerichtet, eine Messspannung zu erfassen und ein Anforderungssignal auszugeben, wenn die Messspannung einen oberen Schwellwert überschreitet. Das Anforderungssignal wird dabei bis zum Vorliegen weiterer Bedingungen oder für einen vorgegebenen Zeitraum ausgegeben, wie unten näher erläutert. Es wird also durch das Überschreiten des oberen Schwellwertes angeschaltet und später wieder ausgeschaltet, nicht jedoch schon durch das anschließende Unterschreiten des oberen Schwellwerts wieder ausgeschaltet.

Die Synchronisationseinheit ist dafür eingerichtet, an einem mit einer Synchronisationsleitung verbindbaren und beim Einsatz des Gleichrichtermoduls in einem entsprechenden aktiven Brückengleichrichter mit einer solchen Synchronisationsleitung verbundenen Synchronisationsanschluss ein Synchronisationssignal auszugeben, solange die zuvor erläuterte Überwachungseinheit das Anforderungssignal ausgibt, und sonst den Synchronisationsanschluss auf ein Synchronisationssignal zu überwachen, das beim Einsatz des Gleichrichtermoduls in einem aktiven Brückengleichrichter ggf. an der Synchronisationsleitung anliegt, weil es von einer anderen Synchronisationseinheit ausgegeben wird.

Das Anforderungssignal kann in unterschiedlichen Ausführungsformen der Erfindung so lange ausgegeben werden, bis die Messspannung einen unteren Schwellwert unterschreitet und/oder bis eine Mindestzeit abgelaufen ist und/oder eine Energiequelle zur Versorgung der Gleichrichtermodule bzw. entsprechender Ansteuerschaltungen der einzelnen Halbbrücken nicht mehr nachgeladen werden kann, wie unten erläutert. Die Messspannung wird beim Einsatz des Gleichrichtermoduls in einem entsprechenden aktiven Brückengleichrichter durch die zwischen den zwei Gleichspannungsanschlüssen anliegende Ausgangsspannung gebildet und am positiven Gleichspannungsanschluss gemessen.

Die Ansteuereinheit ist schließlich dafür eingerichtet, eines der zwei Schaltelemente während eines Ansteuerzeitraums zumindest zeitweise leitend zu schalten, wenn die Überwachungseinheit das Anforderungssignal ausgibt und/oder wenn durch die Überwachungseinheit aufgrund der Überwachung des Synchronisationsanschlusses das Synchronisationssignal detektiert und dieses optional als gültig erkannt wird. Der Ansteuerzeitraum kann dem gesamten Zeitraum entsprechen, während dessen die Überwachungseinheit das Anforderungssignal ausgibt und/oder während durch die Überwachungseinheit aufgrund der Überwachung des Synchronisationsanschlusses das Synchronisationssignal detektiert und ggf. für gültig befunden wird. Der Ansteuerzeitraum ist jedoch vorteilhafterweise durch bzw. auf einen Maximalzeitraum begrenzt, welcher größer als eine vorgegebene Mindestzeit von beispielsweise 500 ms zu wählen ist.

Wird der durch das Anforderungssignal bewirkte Phasenkurzschluss für die Mindestzeit von beispielsweise 500 ms oder mehr aufrechterhalten, bricht die zwischen den Gleichspannungsanschlüssen anliegende Ausgangsspannung (beispielsweise am positiven Gleichspannungsanschluss B+ gemessen) auf einen Wert von (nahezu) 0 V ein. Daher müssen die Ansteuerungslogik (z.B. ein ASIC) und die Leistungsschalter (z.B. ein MOSFET) der Ansteuerschaltungen der Halbbrücken aus einer anderen Energiequelle versorgt werden, typischerweise aus einem Kondensator. Solche Kondensatoren sind z.B. als sogenannte Bootstrap-Kondensatoren typischerweise in einer entsprechenden Gleichrichterschaltung oder in entsprechenden Gleichrichtermodulen enthalten.

Wird damit eine Mindestzeit von z.B. 500 ms oder mehr für einen Phasenkurzschluss gefordert, ist eine entsprechende Dimensionierung der Kondensatoren notwendig, um die Versorgung der Ansteuerungslogik und der Leistungsschalter bei einer entsprechend niedrigen Spannung während des Phasenkurzschlusses zu gewährleisten. Üblicherweise verbaute Kondensatoren werden jedoch nicht auf den Sonderfall Lastabwurf, sondern auf den normalen Gleichrichterbetrieb ausgelegt. Im normalen Gleichrichterbetrieb muss ein entsprechender Kondensator die Ansteuerungslogik und die Leistungsschalter aber lediglich für eine Halbwelle versorgen können. Ohne weitere Maßnahmen könnten entsprechende Kondensatoren daher lediglich eine Energieversorgung für weniger als 10 ms sicherstellen, was für den Lastabwurf nicht ausreicht.

Um auch mit - nur für den Gleichrichterbetrieb ausgebildeten - relativ klein dimensionierten Kondensatoren den erfindungsgemäßen Ansatz realisieren zu können, kann vorgesehen sein, diese während des Lastabwurfs nachzuladen.

Zu diesem Zweck kann vorgesehen sein, dass jede Ansteuereinheit und damit jedes Gleichrichtermodul die an dem jeweiligen Kondensator anliegende Spannung überwacht. Fällt diese unter einen definierten Wert, z.B. unter 8 V, deaktiviert die Ansteuereinheit dieses Gleichrichtermoduls den Phasenkurzschluss nur ihres Schaltelements. Das Synchronisationssignal bleibt davon unberührt. Auf diese Weise geht dieses Gleichrichtermodul wieder in den normalen Gleichrichterbetrieb über und hebt das Spannungspotential zwischen den Gleichspannungsanschlüssen wieder an.

Es kann vorgesehen sein, die Kondensatoren aller Ansteuereinheiten über die Gleichspannungsanschlüsse (bzw. den positiven Gleichspannungsanschluss B+) zu versorgen. Auch durch die Deaktivierung des Phasenkurzschlusses des nur einen Gleichrichtermoduls (im Fall der Erkennung einer zu niedrigen Spannung an deren Kondensator) können daher auch die Kondensatoren der anderen Module nachgeladen werden.

Erreicht die Spannung am Kondensator eine obere Grenze, beispielsweise 12 V, kann der (individuell aufgehobene) Phasenkurzschluss wieder eingeleitet werden. Zusätzlich kann auch die zwischen den Gleichspannungsanschlüssen anliegende Spannung überwacht werden und eine Abschaltung in Abhängigkeit von dieser Spannung erfolgen. Auf diese Weise ergeben sich nur kurze Spannungsanstiege, die nicht dazu führen, dass beispielsweise das Erregerfeld eines angeschlossenen Generators versorgt werden kann. Dieses reduziert sich daher weiter. Auch wird durch das frühere Abschalten bei relativ niedrigen Spannungen sichergestellt, dass keine hohen Spannungen im Bordnetz auftreten.

Werden also die Kondensatoren nur aus den Gleichspannungsanschlüssen versorgt, müssen die Gleichrichtermodule unabhängig voneinander immer wieder kurz den Phasenkurzschluss aufheben, um ihre Kondensatoren nachzuladen.

Reicht die Spannung zum Nachladen der Kondensatoren insgesamt nicht mehr aus, kann der Kurzschluss insgesamt wieder aufgehoben werden. Ist nämlich das Erregerfeld bereits vor Ablauf der erläuterten Mindestzeit so weit abgeklungen, dass die Spannung an den Kondensatoren nicht mehr über der jeweiligen Schwelle, beispielsweise 8 V, gehalten werden kann, werden nach und nach alle Gleichrichtermodule die Unterspannung an ihren Kondensatoren erkennen und individuell den Phasenkurzschluss ihres jeweiligen Schaltelements deaktivieren. Damit gehen zunehmend mehr Phasen bzw. Phasenmodule in den aktiven Gleichrichterbetrieb über. Reicht auch dies nicht zur Ladung der Kondensatoren aus, so kann dies als Ende des Lastabwurfereignisses gewertet werden, d.h. das Erregerfeld des Generators ist soweit abgeklungen, dass selbst ohne Gegenmaßnahme keine kritische Spannung mehr auftritt. Dies führt daher ggf. noch vor Ablauf eines vorgegebenen Zeitraums zu einer Rücknahme des Synchronisationssignals, da die Schaltungselemente nicht mehr mit Spannung versorgt werden. Dieses Verhalten ermöglicht es daher, dass die Schaltung nicht unnötig durch weitere aufwändige Stützmaßnahmen versorgt werden muss.

Das durch die Ansteuereinheit in dem Ansteuerzeitraum zumindest zeitweise leitend geschaltete Schaltelement ist das Schaltelement, das zur Einleitung bzw.

Aufhebung eines entsprechenden Phasenkurzschlusses vorgesehen ist. Das jeweils andere Schaltelement wird hingegen bei Lastabwurf nicht leitend geschaltet. Die Erfindung wird nachfolgend überwiegend unter Bezugnahme auf die entsprechende Ansteuerung eines Schaltelements im unteren bzw. Lowside-Gleichrichterzweig beschrieben, kann jedoch in gleicher Weise für eine Ansteuerung eines entsprechenden Schaltelements in einem oberen bzw. Highside-Gleichrichterzweig eingesetzt werden.

In regulären, hier nicht gesondert betrachteten Betriebsphasen eines entsprechenden Gleichrichtermoduls, d.h. wenn kein Lastabwurf vorliegt, werden alle Schaltelemente gleichrichtend betrieben, also beispielsweise mit einem getakteten Ansteuersignal angesteuert, wie es typischerweise zur Ansteuerung eines entsprechenden Brückengleichrichters im normalen Gleichrichterbetrieb verwendet wird. Dieses Ansteuersignal kann auch von einer übergeordneten Steuereinheit bereitgestellt werden, wobei die jeweilige Ansteuerschaltung ggf. dafür eingerichtet ist, das durch die Steuereinheit bereitgestellte Ansteuersignal an die Schaltelemente weiterzuleiten.

Die vorliegende Erfindung erreicht durch die erwähnten und nachfolgend noch erläuterten Maßnahmen eine Synchronisation der Ansteuerschaltungen der einzelnen Halbbrücken, die es ermöglicht, in allen Halbbrücken des aktiven Brückengleichrichters eine gleichzeitige oder nahezu gleichzeitige (d.h. beispielsweise in einem Zeitabstand von wenigen Mikrosekunden) Leitendschaltung aller an einem Phasenkurzschluss zu beteiligenden Schaltelemente zu bewirken und diese Leitendschaltung ebenfalls gleichzeitig oder nahezu gleichzeitig aufzuheben. Der Phasenkurzschluss kann damit in entsprechend kurzer Zeit eingeleitet und aufgehoben werden. Dadurch werden insbesondere die zuvor erläuterten Situationen sicher verhindert, in denen entweder eine Ansteuerschaltung nie einen Phasenkurzschluss erkennt oder nie den Phasenkurzschluss löst.

Diese Synchronisation wird erfindungsgemäß durch die Bereitstellung der Synchronisationseinheiten in den Ansteuerschaltungen der einzelnen Halbbrücken und ggf. die diese in einem aktiven Gleichrichter verbindende gemeinsame Synchronisationsleitung erreicht. Über diese Synchronisationseinheiten und die Synchronisationsleitung kann prinzipiell jede Art von elektrischer Information zwischen den Synchronisationseinheiten ausgetauscht werden.

Grundsätzlich kann hier eine Synchronisation und eine Kommunikation unterschieden werden. Die Synchronisationsleitung dient in erster Linie zum Zweck der Synchronisation. Die Synchronisationsstrategie ist ein zentraler Aspekt der Erfindung. Als ein zusätzlicher Aspekt kann vorgesehen sein, die Synchronisationsleitung gleichzeitig als Kommunikationsleitung (beispielweise als LIN) zu nutzen, um eine Diagnose zu ermöglichen und Sicherheitslücken des Steuerverfahrens zu schließen. Hierfür ist nur noch eine zusätzliche Kommunikationssteuereinheit in dem Gleichrichtermodul erforderlich. Vorteil hierbei ist, dass eine Diagnose der Fehler im einzelnen Gleichrichtermodul und die Übertragung an das übergeordnete System bzw. Fahrzeugsystem ermöglicht werden. Die Synchronisationsleitung wird bei Lastabwurf aber insbesondere ausschließlich zur Synchronisation eingesetzt. Die Kommunikation, z.B. eine LIN-Funktion, kann beispielsweise nur dann aktiviert werden, wenn der Spannungspegel zwischen den Gleichspannungsanschlüssen unterhalb der unteren Schwelle liegt.

Mittels der erfindungsgemäß vorgesehenen Maßnahmen werden unerwünschte bzw. unbeabsichtigte Phasenkurzschlüsse auch bei Fehlern oder Störungen in den Synchronisationseinheiten bzw. der Synchronisationsleitung sicher verhindert. Keine Funktion der Ansteuerschaltungen der einzelnen Halbbrücken wird durch die zusätzliche Synchronisationseinheit und deren Funktion negativ beeinflusst. Dies bedeutet unter anderem, dass die Ansteuerschaltungen zumindest in einem Notbetrieb auch ohne die erfindungsgemäßen Maßnahmen eingesetzt werden können und auch hierbei keine Nachteile gegenüber herkömmlichen Ansteuerschaltungen zeigen.

Die Synchronisationsleitung kann insbesondere in Form einer Drahtverbindung realisiert sein, wobei die Synchronisationseinheiten in den jeweiligen Ansteuerschaltungen zur Ausgabe von über die Synchronisationsleitung zu übertragenden Synchronisationssignalen und zur Entgegennahme von Synchronisationssignalen, die von anderen Synchronisationseinheiten an die Synchronisationsleitung ausgegeben werden, eingerichtet sind.

Die Synchronisationseinheiten sind dabei auch dafür eingerichtet, das Anforderungssignal aus einer Überwachungseinheit der zugehörigen Ansteuerschaltung, welches beispielsweise auf Grundlage des erläuterten Schwellwertvergleichs der Ausgangsspannung ausgegeben wird, und welches auch in herkömmlichen Ansteuerschaltungen vorgesehen ist, entgegenzunehmen. Das Anforderungssignal signalisiert dabei, dass das hierfür vorgesehene Schaltelement in den leitenden Zustand zu versetzen ist, und liegt so lange an, wie dieser leitende Zustand aufrecht zu erhalten ist, also so lange, bis die Ausgangsspannung den erwähnten unteren Schwellwert unterschreitet und/oder ein maximaler Anforderungszeitraum noch nicht erreicht ist. Die eigentliche Ansteuerung der verwendeten Schaltelemente erfolgt durch das Ansteuersignal der Ansteuerschaltung, das seinerseits einen Mindestzeitraum begrenzt wird. Um Fehlfunktionen auszuschließen, kann der maximale Anforderungszeitraum begrenzt werden, er muss jedoch größer als der Mindestzeitraum sein.

Wird ein entsprechendes Anforderungssignal aus der Überwachungseinheit der zugehörigen Ansteuerschaltung entgegengenommen, und wurde noch kein Synchronisationssignal über die Synchronisationsleitung entgegengenommen, gibt die jeweilige Synchronisationseinheit ein entsprechendes Synchronisationssignal an die Synchronisationsleitung aus. Hierbei kann es sich beispielsweise um eine logische Eins handeln, die an die Synchronisationsleitung angelegt wird. Das Synchronisationssignal wird so lange ausgegeben, wie die Überwachungseinheit das Anforderungssignal nicht aufhebt. Gleichzeitig wird über die Ansteuerschaltung bzw. mittels einer Ansteuereinheit das jeweils dafür vorgesehene Schaltelement in den leitenden Zustand versetzt.

Die Ansteuerschaltungen der anderen Halbbrücken, bzw. deren Synchronisationseinheiten, die i.d.R. noch kein eigenes Anforderungssignal entgegengenommen haben, nehmen das über die Synchronisationsleitung übertragende Synchronisationssignal entgegen und werten dieses aus. Ergibt diese Auswertung, beispielsweise im Rahmen einer Plausibilitätsprüfung, die jedoch optional ist, dass ein Phasenkurzschluss einzuleiten ist, versetzen die Ansteuerschaltungen der anderen Halbbrücken das jeweils dafür vorgesehene Schaltelement in den leitenden Zustand, ggf. mittels einer Ansteuereinheit. Entsprechend wird das Einleiten des Phasenkurzschlusses mittels des Synchronisationssignals synchronisiert. Die hierbei verstreichende Zeit bestimmt sich lediglich nach der Dauer der Übertragung des Synchronisationssignals und ggf. der Zeit, die für die erwähnte Plausibilitätsprüfung erforderlich ist.

Zudem wird aber nun auch durch die Ansteuerschaltungen der anderen Halbbrücken bzw. deren Synchronisationseinheiten, das entsprechende Synchronisationssignal ausgegeben, beispielsweise die erwähnte logische Eins, und zwar auch hier so lange, wie die jeweiligen Ansteuerschaltungen der anderen Halbbrücken das Anforderungssignal ausgeben.

Unmittelbar nach dem Austausch des Synchronisationssignals, bzw. unmittelbar nach dem Einleiten des Phasenkurzschlusses, geben daher alle Ansteuerschaltungen bzw. deren Synchronisationseinheiten ein entsprechendes Synchronisationssignal an die Synchronisationsleitung aus. Beispielsweise liegt an den Kommunikationsanschlüssen der Synchronisationseinheiten aller Ansteuerschaltungen an die Synchronisationsleitung jeweils eine logische Eins an.

Im einfachsten Fall wird das Synchronisationssignal bis zum Ablauf des maximalen Anforderungszeitraums ausgegeben oder auch nur bis erkannt wird, dass eine Versorgungsspannung eines Kondensators nicht mehr ausreicht (s.o.). Die Erfindung kann jedoch auch vorsehen, einen unteren Schwellwert der an den Gleichspannungsanschlüssen anliegenden Spannung zu verwenden:
Geht diese Ausgangsspannung durch den Phasenkurzschluss wieder zurück, detektiert in einer besonders vorteilhaften Ausführungsform der Erfindung die Ansteuerschaltung bzw. die entsprechende Überwachungseinheit mit dem effektiv höchsten unteren Schwellwert dies. Die Ausgabe des zuvor erläuterten Anforderungssignals an die zugehörige Synchronisationseinheit wird daher beendet. Aufgrund dessen beendet diese Synchronisationseinheit auch die Ausgabe des Synchronisationssignals an die Synchronisationsleitung. Da jedoch die anderen Ansteuerschaltungen weiterhin ein entsprechendes Synchronisationssignal an die Synchronisationsleitung ausgeben, weil dort der (effektiv niedrigere) untere Schwellwert noch nicht unterschritten wurde, verbleiben die ersten Schaltelemente aller Halbbrücken im leitenden Zustand. Mit anderen Worten verbleiben die leitend geschalteten Schaltelemente aller Halbbrücken im leitenden Zustand, solange noch zumindest eine der Ansteuereinheiten ein Synchronisationssignal ausgibt.

Erst wenn auch die letzte Überwachungseinheit, also die Überwachungseinheit mit dem effektiv niedrigsten unteren Schwellwert, eine Unterschreitung des unteren Schwellwerts durch die Ausgangsspannung detektiert hat, liegt kein Synchronisationssignal mehr an der Synchronisationsleitung an. Erst dann werden die leitend geschalteten Schaltelemente wieder im normalen Gleichrichterbetrieb betrieben (d.h. mit dem ersten Ansteuersignal angesteuert). Dies erfolgt wiederum so lange, bis eine der Überwachungseinheiten eine Überschreitung des oberen Schwellwerts detektiert, daraufhin das erste Ansteuersignal ausgibt usw.

Besondere Vorteile der erfindungsgemäß vorgeschlagenen Maßnahmen werden nachfolgend kurz erläutert.

Das synchronisierte Einleiten des Phasenkurzschlusses wird erfindungsgemäß ohne vorherige Festlegung eines Kommunikationsmasters und eines entsprechenden Slaves realisiert. Alle Ansteuerschaltungen bzw. deren Synchronisationseinheiten und damit alle Gleichrichtermodule können daher identisch aufgebaut sein. Abhängig von den jeweiligen Toleranzen agiert diejenige Ansteuerschaltung bzw. diejenige Synchronisationseinheit als Kommunikationsmaster für die Aktivierung des Phasenkurzschlusses bzw. leitet die Synchronisation ein, bei der die zugehörige Überwachungseinheit den niedrigsten oberen Schwellwert aufweist. Damit ist gewährleistet, dass der Phasenkurzschluss nicht aufgrund der Toleranz einer einzelnen Ansteuerschaltung bzw. einer einzelnen Überwachungseinheit ggf. zu spät aktiviert und damit eine Überspannung nicht unter einer definierten Grenze gehalten werden kann.

Das synchronisierte Aufheben des Phasenkurzschlusses wird in der zuvor erläuterten Ausführungsform erst durch diejenige Ansteuerschaltung, deren Überwachungseinheit den niedrigsten unteren Schwellwert aufweist, eingeleitet. Die zugehörige Synchronisationseinheit wird diesbezüglich zum Synchronisationsmaster für Aufheben. Die anderen Ansteuerschaltungen, die in diesem Fall die Slaves darstellen, dürfen nicht selbständig den dauerhaft leitenden Zustand des leitend geschalteten Schaltelements aufheben, auch wenn der untere Schwellwert der jeweiligen Überwachungseinheit unterschritten ist.

Durch die Auswertung des über die Synchronisationsleitung anliegenden Synchronisationssignals kann dieses, wie erwähnt, plausibilisiert werden. Beispielsweise kann vorgesehen sein, dass ein entsprechendes Synchronisationssignal nicht akzeptiert wird, solange die Ausgangsspannung den unteren Schwellwert in der zugehörigen Überwachungseinheit nicht überschreitet. Hierdurch kann ein fehlerhaftes Synchronisationssignal ausgeblendet werden.

Die Auswertung des über die Synchronisationsleitung anliegenden Synchronisationssignals kann auch in einer Form erfolgen, durch die beispielsweise ein durch einen Kurzschluss der Synchronisationsleitung nach Masse (bzw. den negativen Gleichspannungsanschluss) verursachter Fehler erkannt und adäquat hierauf reagiert werden kann. Beispielsweise kann vorgesehen sein, dass, wenn das Synchronisationssignal über mehr als einen vorgegebenen Zeitraum, beispielsweise 100 ms, in einem normalen Spannungsbereich der Ausgangsspannung anliegt, dieses in der dies jeweils erkennenden Ansteuerschaltung bzw. deren Synchronisationseinheit für zumindest den momentanen Fahrzyklus nicht mehr akzeptiert wird. Ein ungewollter Phasenkurzschluss kann dadurch verhindert werden. Im Fall eines danach erfolgenden Lastabwurfs kann jede Ansteuerschaltung immer noch individuell den Phasenkurzschluss aktivieren bzw. deaktivieren wie im Stand der Technik. Daher haben die erfindungsgemäß vorgeschlagenen Ansteuerschaltungen mit auch im Fehlerfall keinen Nachteil gegenüber bekannten Ansteuerschaltungen.

In anderen Fehlerfällen, wie beispielsweise einem Kurzschluss der Synchronisationsleitung gegen einen positiven Gleichspannungsanschluss des aktiven Brückengleichrichters oder einer Unterbrechung der Synchronisationsleitung kann ebenfalls jede einzelne Ansteuerschaltung bei Lastabwurf individuell agieren und einen Phasenkurzschluss einleiten. Daher haben die erfindungsgemäß vorgeschlagenen Ansteuerschaltungen auch in derartigen Fehlerfällen keinen Nachteil gegenüber bekannten Ansteuerschaltungen.

Ein Überhitzungsschutz im Fall eines Kurzschlusses der Synchronisationsleitung gegen einen positiven Gleichspannungsanschluss des aktiven Brückengleichrichters kann ebenfalls vorgesehen sein, wie unten erläutert.

Die erfindungsgemäß ausgebildeten Ansteuerschaltungen, bzw. Baugruppen mit derartigen Ansteuerschaltungen können auch dann verbaut und eingesetzt werden, wenn keine Synchronisationsleitung physikalisch vorgesehen ist.

Die zuvor im Detail erläuterten Ansteuerschaltungen mit den Synchronisationseinheiten, den Überwachungseinheiten und den Ansteuereinheiten können zusammen mit den Schaltelementen in einer hier als Gleichrichtermodul bezeichneten Baugruppe zusammengefasst werden. Wie erläutert, weisen diese zwei zwischen zwei Endanschlüssen in Reihenschaltung miteinander verbundene Schaltelemente und einen Mittelabgriff zwischen den Schaltelementen auf. Die Endanschlüsse von mehreren (entsprechend der Anzahl von Generatorphasen von drei, vier, fünf, sechs usw.) Gleichrichtermodulen können dabei in Reihe miteinander verbunden werden und auf diese Weise gemeinsam entsprechende Gleichspannungsanschlüsse eines aus diesen Gleichrichtermodulen aufgebauten aktiven Brückengleichrichters bilden. Die Mittelabgriffe bilden entsprechend die jeweiligen Wechselspannungsanschlüsse.

Eine Generatoranordnung mit einem entsprechenden, beispielsweise aus den erwähnten Gleichrichtermodulen aufgebauten, Brückengleichrichter weist zudem einen Generator mit einem Generatorregler auf. Der Generatorregler hat die Aufgabe, die Generatorspannung bei veränderlicher Drehzahl und Bordnetzlast konstant zu halten, indem er den Erregerstrom, beispielsweise mittels Pulsweitenmodulation, nach Maßgabe einer Generatorsollspannung einstellt. Als Istwert dient die mehrfach erwähnte Ausgangsspannung zwischen den Gleichspannungsanschlüssen des zugehörigen aktiven Brückengleichrichters. Die Generatorsollspannung ist dabei entweder eine Funktion der Ansauglufttemperatur oder kann über eine Schnittstelle vorgegeben werden. Der Grund für die temperaturabhängige Vorgabe der Generatorsollspannung liegt in den chemischen Eigenschaften der Batterie. Durch eine variable Vorgabe der Generatorsollspannung kann bei niedrigen Temperaturen die Batterieladung verbessert und gleichzeitig bei hohen Temperaturen eine Überladung der Batterie vermieden werden.

Wird bei einem Lastabwurf, wie oben erläutert, ein Phasenkurzschluss herbeigeführt, so kann dies je nach Wahl der Deaktivierungsschwelle für den Phasenkurzschluss dazu führen, dass der Generatorregler eine Ausgangsspannung detektiert, die niedriger als die Generatorsollspannung ist. Dies wird im Generatorregler als Unterspannung erkannt. Um der Unterspannung entgegenzuwirken, wird der Generatorregler das Erregerfeld erhöhen, was wiederum dazu führt, dass der Phasenkurzschluss nicht aufgehoben werden kann, weil die zuvor mehrfach erwähnten unteren Schwellwerte nicht erreicht werden. Der Generator kommt also nicht zurück in den normalen Generatorbetrieb, da die zuvor erläuterte Lastabwurfsschutzfunktion gegen die Funktion des Generatorreglers arbeitet. Der Generator kann dadurch beschädigt werden.

Eine vorteilhafte Weiterbildung der Erfindung sieht daher vor, auch den Generatorregler am der erläuterten Synchronisation zu beteiligen. Im Fall des Generatorreglers kann daher eine Synchronisationsschnittstelle mit der zuvor erläuterten gemeinsamen Synchronisationsleitung der Ansteuerschaltungen der einzelnen Halbbrücken des aktiven Brückengleichrichters vorgesehen sein.

Wird über die Synchronisationsschnittstelle des Generatorreglers ein an der Synchronisationsleitung anliegendes Synchronisationssignal detektiert, und kann dieses ggf. wie zuvor erläutert plausibilisiert werden, kann beispielsweise die Spannungsversorgung des Erregerfelds des Generators für einen definierten Zeitraum abgeschaltet werden, so dass der Erregerstrom abklingt. Auch der Generator selbst kann abgeschaltet werden. Die Spannungsversorgung für das Erregerfeld für einen definierten Zeitraum abzuschalten kann dabei umfassen, einen entsprechenden Generatorregler abzuschalten, die komplette Versorgungsspannung des Reglers abzuschalten, den Erregerstrom auf Grundlage einer reduzierten Generatorsollspannung zu regeln und/oder den Erregerstrom auf einen vorgegebenen Wert einzustellen.

Der definierte Zeitraum, für den der Erregerstrom reduziert wird, kann dabei dem Zeitraum entsprechen, über den an der Synchronisationsleitung das Synchronisationssignal anliegt, oder fest vorgegeben werden und sich nach typischen Zeiträumen richten, die zum Ausgleich eines Lastabwurfs benötigt werden.

Wird beim Lastabwurf der Phasenkurzschluss für eine bestimmte Mindestzeit von z.B. 500 ms gehalten bzw. bis zum nicht mehr möglichen Nachladen des Versorgungskondensators (siehe oben), so kann das Erregerfeld ebenfalls nicht mehr mit Energie versorgt werden, was inhärent dazu führt, dass das Erregerfeld abklingt und der Generator letztendlich ausgeht, auch wenn der Regler die Unterspannung erkennt und die entsprechende Feldendstufe einschaltet.

Die im Rahmen dieser Anmeldung erläuterten Merkmale und die dadurch erzielbaren Vorteile betreffen den erfindungsgemäßen aktiven Brückengleichrichter, die erfindungsgemäße Generatoranordnung, das erfindungsgemäße Kraftfahrzeugbordnetz, das erfindungsgemäße Betriebsverfahren und die erfindungsgemäßen Mittel, die zur Implementierung dieses Betriebsverfahrens eingerichtet sind. Eine erfindungsgemäße Recheneinheit, z.B. ein Steuergerät eines Kraftfahrzeugs oder eine Gleichrichtersteuerung, ist, insbesondere programmtechnisch, dazu eingerichtet, ein erfindungsgemäßes Verfahren durchzuführen.

Auch die Implementierung des Verfahrens in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Kurze Beschreibung der Zeichnungen

Figuren 1A bis 1C zeigen Generatoranordnungen mit aktiven Brückengleichrichtern und deren Funktion in schematischer Darstellung.
Figur 2 veranschaulicht Asymmetrieeffekte in einem aktiven Brückengleichrichter gemäß dem Stand der Technik.
Figuren 3A und 3B zeigen Ansteuereinheiten gemäß dem Stand der Technik und gemäß einer Ausführungsform der Erfindung in schematischer Darstellung.
Figur 4 zeigt eine Plausibilisierungsschaltung gemäß einer Ausführungsform der Erfindung in schematischer Darstellung.

In den Figuren sind gleiche oder einander entsprechende Elemente mit gleichen Bezugszeichen angegeben. Auf eine wiederholte Erläuterung wird verzichtet.

### Ausführungsform(en) der Erfindung

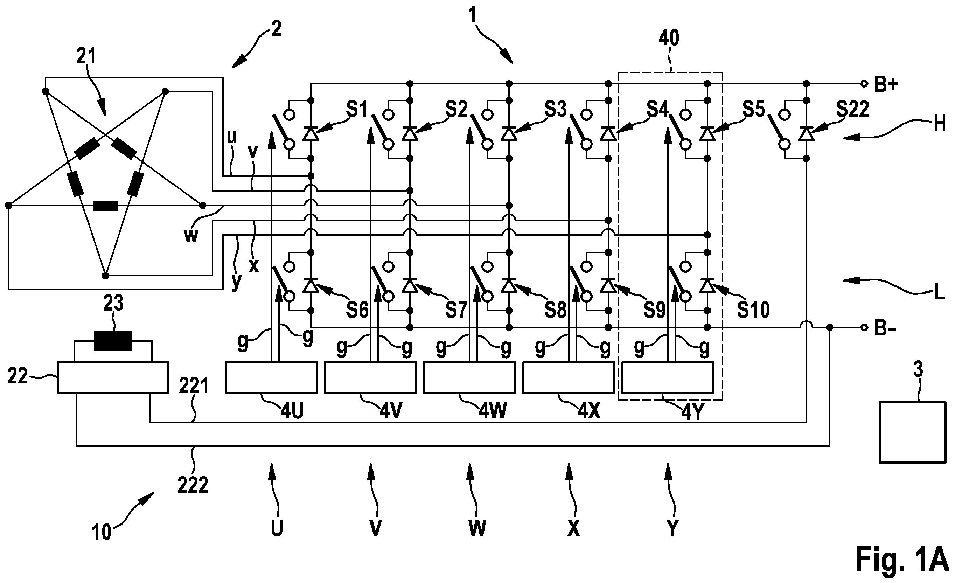

Die Figuren 1A bis 1C zeigen Generatoranordnungen mit aktiven Brückengleichrichtern und deren Funktion in schematischer Darstellung. Die Generatoranordnungen sind jeweils insgesamt mit 10 bezeichnet. Sie umfassen jeweils einen aktiven Brückengleichrichter 1 mit hier beispielsweise fünf Halbbrücken U bis Y. Die fünf Halbbrücken U bis Y können jeweils als entsprechende Gleichrichtermodule ausgebildet sein, wie hier aus Gründen der Übersichtlichkeit nur bezüglich des Gleichrichtermoduls 40 in Figur 1A (Halbbrücke Y) veranschaulicht. Die Generatoranordnungen 10 umfassen ferner einen hier beispielsweise fünfphasigen Generator 2.

Die fünf Halbbrücken U bis Y sind jeweils zwischen zwei Gleichspannungsanschlüsse B+ und B- des aktiven Brückengleichrichters 1 eingebunden, wobei jede Halbbrücke U bis Y zwei zwischen den zwei Gleichspannungsanschlüssen B+ und B- in Reihe geschaltete und ansteuerbare Schaltelemente aufweist, die hier mit S1 bis S10 bezeichnet sind. Die Schaltelemente S1 bis S10 sind als Schalter mit parallel geschalteter Diode veranschaulicht, in der Realität jedoch beispielsweise als MOSFET ausgebildet. Die Diode veranschaulicht die sogenannte Body-Diode. In Rückwärtsrichtung verhalten sich die MOSFET, wenn sie nicht angesteuert werden, wie eine Diode. Zwischen den Schaltelementen S1 bis S10 ist in jeder Halbbrücke jeweils ein Wechselspannungsanschluss u bis y angeschlossen, wobei jeder der Wechselspannungsanschlüsse u bis y einer Generatorphase des Generators 2 entspricht. Die zwei Gleichspannungsanschlüsse B+ und B-des aktiven Brückengleichrichters 1 entsprechen beispielsweise einem positiven und einem negativen Batterie- bzw. Bordnetzanschluss, wobei der negative Batterie- bzw. Bordnetzanschluss auch auf Masse liegen kann. Die Schaltelemente S1 bis S10 sind jeweils in einen oberen Zweig H (Highside) und einen unteren Zweig L (Lowside) der jeweiligen Halbbrücken U bis Y eingebunden.

Die Wechselspannungsanschlüsse u bis y können jeweils nach Maßgabe einer entsprechenden Beschaltung der Schaltelemente S1 bis S10 mit einem der zwei Gleichspannungsanschlüsse B+ und B- verbunden werden, wobei eine gleichzeitige Ansteuerung jeweils beider Schaltelemente einer Halbbrücke U bis Y im Regelbetrieb zu vermeiden ist, um sogenannte heiße Pfade zwischen den zwei Gleichspannungsanschlüssen B+ und B- zu verhindern.

Der Generator 2 weist eine insgesamt mit 21 bezeichnete Statoranordnung, die hier in Sternschaltung ausgebildet ist, jedoch in anderer Anordnung vorgesehen sein kann, auf. Die fünf Wicklungen der Statoranordnung 21 (ohne Bezeichnung) sind mit den Wechselspannungsanschlüssen u bis y verbunden.

Der Generator 2 weist ferner einen Generatorregler 22 auf. Der Generatorregler 22 ist dazu ausgebildet, wie erläutert einen Erregerstrom durch eine Erregerwicklung 23 einzustellen. Der Generatorregler 22 kann mittels der Leitungen 221 und 222 mit den zwei Gleichspannungsanschlüssen B+ und B- verbunden sein und über diese versorgt werden. Über diese Leitungen 221 und 222 und/oder eine separate Messleitung kann der Generatorregler 22 auch eine zwischen den zwei Gleichspannungsanschlüssen B+ und B- anliegende Spannung detektieren. Es kann ein Schaltelement S22 vorgesehen sein, mittels dessen der Generatorregler 22 von den zwei Gleichspannungsanschlüssen B+ und B- (bzw. nur dem positiven Gleichspannungsanschluss 22) getrennt werden kann.

Der Schalter S22 ist in der Figur nicht mit einer Ansteuerleitung gezeigt. Beispielsweise ist es möglich, diesen, ggf. über eine weitere Logik oder, bei Einsatz einer Zeitsteuerung, ggf. direkt aus einer Synchronisationsleitung (siehe unten) anzusteuern, wenn ein hier verwendetes Spannungspotential geeignet ist.

Zur Ansteuerung des aktiven Brückengleichrichters 1 kann eine Steuereinheit 3 vorgesehen sein. In einem hier dargestellten dezentralen aktiven Brückengleichrichter 1 übernehmen jedoch individuelle Ansteuerschaltungen, hier mit 4U bis 4Y bezeichnet, zumindest einen Teil der erforderlichen Schaltaufgaben der jeweiligen Halbbrücken U bis Y. Die Schaltelemente S1 bis S10 können dabei jeweils über punktiert dargestellte Leitungen g mittels der individuellen Ansteuerschaltungen 4U bis 4Y mit einem Ansteuersignal angesteuert werden. Hierbei kann es sich beispielsweise bei Lastabwurf um ein Ansteuersignal handeln, das sämtliche Schaltelemente S1 bis S5 in dem oberen Zweig H (Highside) oder sämtliche Schaltelemente S6 bis S10 bzw. dem unteren Zweig L (Lowside) der jeweiligen Halbbrücken U bis Y dauerhaft leitend schaltet. Ein anderes Ansteuersignal kann für einen regulären Gleichrichterbetrieb beispielsweise ein Ansteuermuster umfassen, das durch die Steuereinheit 3 vorgegeben wird.

Die Schaltelemente einer jeden Halbbrücke U bis Y (also S1/S6, S2/S7, S3/S8, S4/S9 und S5/S10) werden im normalen Gleichrichterbetrieb dabei derart angesteuert, dass ein an einem der Wechselspannungsanschlüsse u bis y anliegender Strom jeweils einer der fünf Wicklungen der Statoranordnung 21 des Generators 2 abwechselnd zu einem der zwei Gleichspannungsanschlüsse B+ und B-durchgesteuert wird. Regelhaft erfolgt dies derart, dass bei Anliegen einer positiven Halbwelle an den Wechselspannungsanschlüsse u bis y der jeweilige Strom nach B+, bei Anliegen einer negativen Halbwelle der Strom hingegen nach B-durchgesteuert wird. Die Einstellung einer Ausgangsspannung an B+ kann auch durch eine entsprechende Taktung erfolgen.

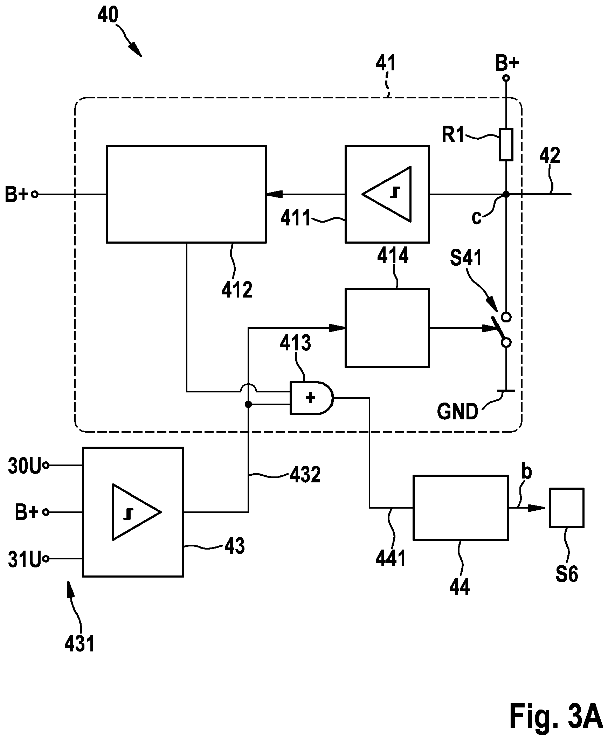

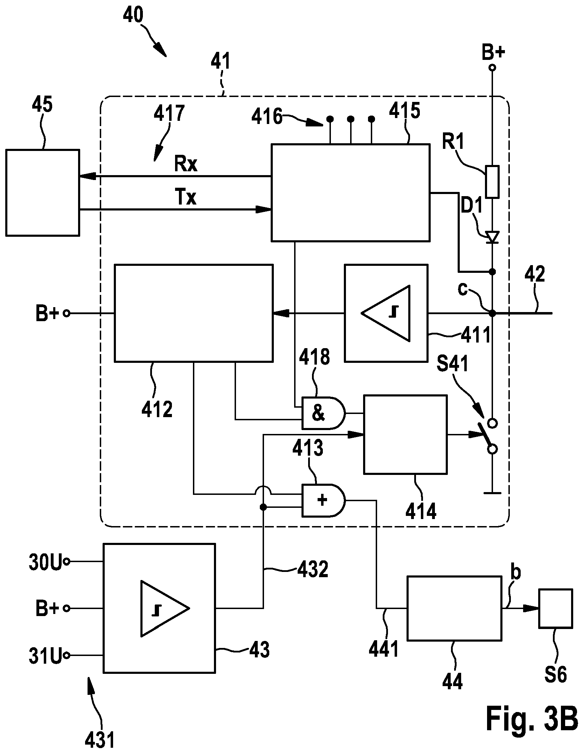

Ein Lastabwurf kann in einer in Figur 1A dargestellten Anordnung auf Grundlage eine an B+ anliegenden Spannung detektiert werden. Hierzu sind im dargestellten Beispiel die individuellen Ansteuerschaltungen 4U bis 4W eingerichtet, wie auch unten unter Bezugnahme auf die Figuren 3A und 3B veranschaulicht. Die individuellen Ansteuerschaltungen 4U bis 4Y sind dabei über nicht gezeigte Leitungen mit zumindest einem der zwei Gleichspannungsanschlüsse B+ und B-des aktiven Brückengleichrichters 1 verbunden. Wenn ein definierter oberer Schwellwert einer zwischen den zwei Gleichspannungsanschlüssen B+ und B-des aktiven Brückengleichrichters 1 anliegenden Ausgangsspannung überschritten wird, kann ein Lastabwurf erkannt werden.

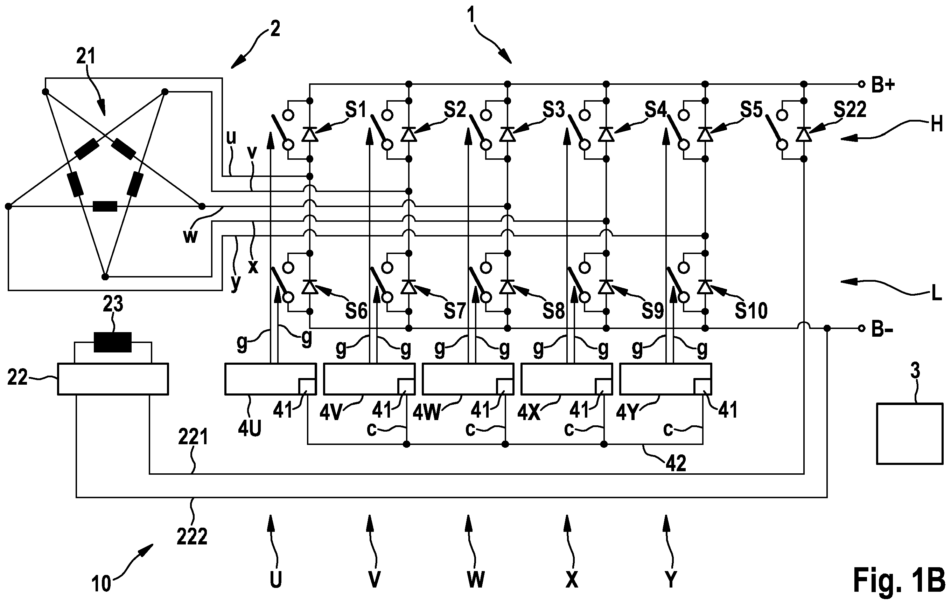

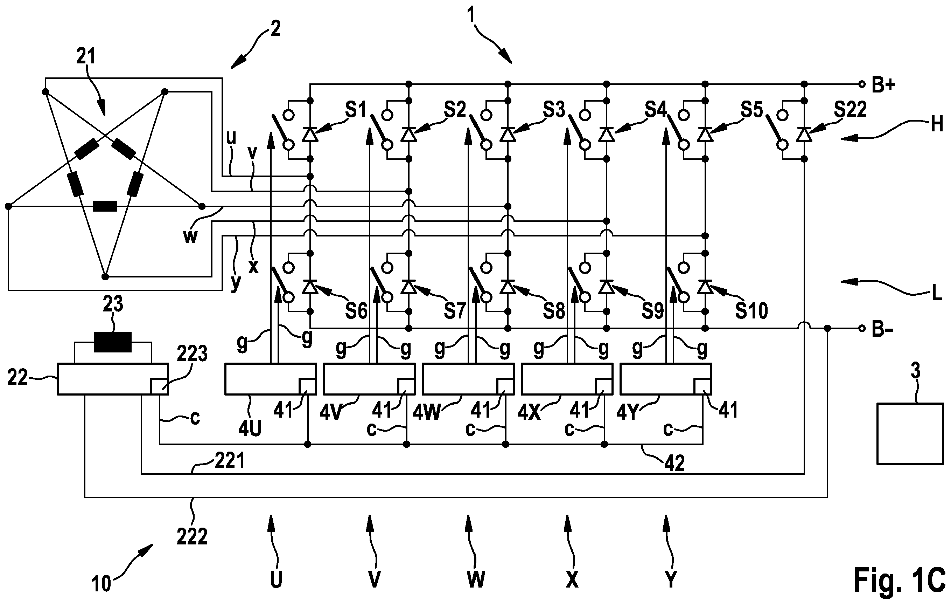

Die Ansteuerung des aktiven Brückengleichrichters 1 bei einem erkannten Lastabwurf kann derart erfolgen, dass die Phasenwicklungen des Generators 2, die jeweils über einen der Wechselspannungsanschlüsse u bis y mit den Halbbrücken U bis Y des aktiven Brückengleichrichters 1 verbunden sind, zeitlich definiert kurzgeschlossen werden. In der Folge fällt der in das Bordnetz eingespeiste Strom auf null ab und die Spannung des Bordnetzes fällt aufgrund des eigenen Verbrauchs ab. Ein entsprechender Kurzschluss kann durch ein gleichzeitiges Ansteuern und damit Leitendschalten der Schaltelemente S1 bis S5 einerseits bzw. S6 bis S10 andererseits jeweils eines Gleichrichterzweigs H bzw. L hergestellt werden. Wird der Kurzschluss gelöst, steigt die Spannung wieder an. Dieser Ablauf kann zur Regelung der Ausgangsspannung und/oder zum Abbau einer Überspannung des Generators verwendet werden. Wie erwähnt, erfolgt dies bei Verwendung der individuellen Auswerteschaltungen 4U bis 4Y gemäß dem Stand der Technik, wie er in der Figur 1A gezeigt ist, jedoch nicht zuverlässig. Dies ist unten unter Bezugnahme auf die Figur 2 veranschaulicht. Eine Lösung gemäß Ausführungsformen der Erfindung ist in den nachfolgenden Figuren 1B und 1C und unter Bezugnahme auf die Figuren 3A und 3B veranschaulicht.

In den Figuren 1B und 1C sind jeweils Anordnungen mit einem fünfphasigen Generator 2 und einem aktiven Brückengleichrichter 1 mit fünf Halbbrücken wie in Figur 1A dargestellt und mit entsprechenden Bezugszeichen versehen.

In dem in Figur 1B dargestellten Beispiel weisen die Ansteuerschaltungen 4U bis 4Y jeweils eine Synchronisationseinheit 41 auf, die über einen Synchronisationsanschluss c an eine gemeinsame Synchronisationsleitung 42 angebunden ist. Wie zuvor erläutert und unter Bezugnahme auf die Figuren 3A und 3B beschrieben, können sich die Ansteuerschaltungen 4U bis 4Y beispielsweise durch Anlegen eines Signals, das einer logischen Eins entspricht, an die Synchronisationsleitung 42 bzw. durch Aufheben eines entsprechenden Signals austauschen. Über nicht gezeigte weitere Anschlüsse können die Synchronisationseinheiten 41 auch, beispielsweise über ein serielles Bussystem, mit einer Fehlerdiagnoseeinheit verbunden sein. Dies ist insbesondere in Figur 3B gezeigt.

In dem in Figur 1C dargestellten Beispiel weist auch der Generatorregler 22 eine Kommunikationsschnittstelle 223 auf. Wird, wie erwähnt, über die Kommunikationsschnittstelle 223 des Generatorreglers 22 ein an der Synchronisationsleitung 42 anliegendes Synchronisationssignal detektiert, und kann dieses ggf. wie zuvor erläutert plausibilisiert werden, kann vorgesehen sein, dass der Generatorregler für eine bestimmte Mindestzeit die Spannungsversorgung für sein Erregerfeld abschaltet, so dass dieses abklingt (beispielsweise über eine Freilaufdiode). Alternativ kann der Regler über eine zusätzliche Logik, welche ebenfalls die Synchronisationsleitung überwacht, über das Schaltelement S22 komplett von der Spannungsversorgung getrennt werden, so dass das Erregerfeld abklingt und der Regler auch nicht nachregeln kann.

In Figur 2 sind Asymmetrieeffekte in einem aktiven Brückengleichrichter gemäß dem Stand der Technik veranschaulicht, dessen Halbbrücken, wie unter Bezugnahme auf die Figur 1A veranschaulicht, individuelle Ansteuerschaltungen ohne erfindungsgemäße Lösungen aufweisen. Aus Übersichtlichkeitsgründen bezieht sich die Figur 2 auf einen dreiphasigen aktiven Brückengleichrichter, in gleicher Weise gelten die Erläuterungen jedoch auch für einen fünfphasigen aktiven Brückengleichrichter, wie er in den Figuren 1A bis 1C veranschaulicht ist, oder einen aktiven Brückengleichrichter mit anderer Phasenzahl.

In der Figur 2 sind jeweils obere (effektive) Schwellwerte der individuellen Ansteuerschaltungen der Halbbrücken U bis W eines entsprechenden Gleichrichters mit 30U bis 30W bezeichnet, die unteren (effektiven) Schwellwerte entsprechend mit 31U bis 31W. Es ist ersichtlich, dass der obere und der untere Schwellwert der Ansteuerschaltung der Halbbrücke W, 30W und 31W, oberhalb der Schwellwerte der Ansteuerschaltung der Halbbrücke V, 30V und 31V, liegt, welcher wiederum oberhalb der Schwellwerte der Ansteuerschaltungen der Halbbrücke U, 30U und 31U, liegt.

In einem Diagramm 300 ist ein Spannungsverlauf 301, wie er beispielsweise an einem Gleichspannungsanschluss eines derartigen aktiven Brückengleichrichters anliegt, beispielsweise dem Gleichspannungsanschluss B+, als Spannungswert U in V auf der Ordinate gegenüber einer Zeit t in s auf der Abszisse aufgetragen.

Zwischen den Zeitpunkten t0 und tLD erfolgt dabei ein regulärer Betrieb, der Spannungswert des Spannungsverlaufs 301 liegt in einem bei einer Gleichrichtung üblichen Bereich und entspricht beispielsweise einer Sollspannung für ein Bordnetz, beispielsweise 12 V. Der entsprechende aktive Brückengleichrichter befindet sich damit im regulären Gleichrichterbetrieb. Zu einem Zeitpunkt tLD erfolgt ein Lastabwurf, beispielsweise durch Abschalten eines Verbrauchers im Bordnetz. Der Spannungswert des Spannungsverlaufs 301 steigt schlagartig an.

An einem Punkt 311 erreicht der Spannungswert des Spannungsverlaufs 301 den oberen Schwellwert 30U der Ansteuerschaltung der Halbbrücke U. Das hierfür vorgesehene Schaltelement dieser Halbbrücke U, beispielsweise das Lowside-Schaltelement, wird daher leitend geschaltet. Der Spannungsanstieg flacht sich dadurch ab, erreicht aber noch bei einem Punkt 312 den oberen Schwellwert 30V der Ansteuerschaltung der Halbbrücke V. Auch das hierfür vorgesehene Schaltelement dieser Halbbrücke V wird damit leitend geschaltet. Aufgrund dessen sinkt der Spannungswert des Spannungsverlaufs 301. Der obere Schwellwert 30W der Ansteuerschaltung der Halbbrücke W, 30W, wird damit nicht mehr erreicht, so dass das entsprechende Schaltelement dieser Halbbrücke W in der regulären Ansteuerung, z.B. einer getakteten Ansteuerung, die es auch zwischen den Zeitpunkten t0 und tLD erfährt, verbleibt.

An einem Punkt 313 erreicht der Spannungswert des Spannungsverlaufs 301 den unteren Schwellwert 31W der Ansteuerschaltung der Halbbrücke W. Da diese jedoch zuvor keinen leitenden Zustand des entsprechenden Schaltelements eingeleitet hat, ergibt sich hier keine Änderung.

An einem Punkt 314 erreicht der Spannungswert des Spannungsverlaufs 301 jedoch den unteren Schwellwert 31V der Ansteuerschaltung der Halbbrücke V. Die Ansteuerschaltung 4U der Halbbrücke V hebt nun den dauerhaft leitenden Zustand des entsprechenden Schaltelements auf und kehrt zur regulären Ansteuerung, z.B. einer getakteten Ansteuerung, die auch zwischen den Zeitpunkten t0 und tLD erfolgt, zurück, so dass nur noch das durch die Ansteuerschaltung der Halbbrücke U angesteuerte Schaltelement im dauerhaft leitenden Zustand bleibt.

Da nun jedoch nur noch dieses eine Schaltelement dauerhaft leitend geschaltet ist, erhöht sich der Spannungswert des Spannungsverlaufs 301 wieder. Das durch die Ansteuerschaltung der Halbbrücke U angesteuerte Schaltelement kann daher nicht mehr in die reguläre Ansteuerung kommen, da der untere Schwellwert 31U nicht mehr erreicht wird. Das durch die Ansteuerschaltung der Halbbrücke U angesteuerte Schaltelement wird dadurch übermäßig stark belastet.

In den Figuren 3A und 3B sind zur Lösung dieses Problems vorgeschlagene Gleichrichtermodule 40 teilweise gezeigt, wie sie für alle Halbbrücken U bis Y eines entsprechenden aktiven Gleichrichters 1, wie er beispielsweise in den Figuren 1A bis 1C dargestellt ist, zum Einsatz kommen können. Nicht alle Komponenten eines entsprechenden Gleichrichtermoduls sind dargestellt; beispielsweise ist nur ein Schaltelement S6 gezeigt. Die Synchronisationseinheit 41 ist hierbei jeweils gestrichelt umfasst dargestellt. Sie ist, wie erwähnt, an die Synchronisationsleitung 42 über einen Synchronisationsanschluss c angebunden.

Eine jeweils vorgesehene Überwachungseinheit ist mit 43 bezeichnet. Diese verfügt im dargestellten Beispiel über drei Eingänge 431, wobei der hier in der Mitte gezeigte Eingang mit dem positiven Gleichspannungsanschluss B+ des aktiven Brückengleichrichters 1 verbunden ist und die hier oben und unten gezeigten Anschlüsse zur Vorgabe der jeweiligen oberen und unteren Schwellwerte, z.B. 30U und 31U, eingerichtet sind (vgl. Figur 2). Liegt an dem positiven Gleichspannungsanschluss B+ des aktiven Brückengleichrichters 1 ein Signal an, das den oberen Schwellwert 30U überschreitet, wird über einen Ausgang 432 der Überwachungseinheit 43 ein Anforderungssignal, beispielsweise eine logische Eins, an ein ODER-Gatter 413 der Synchronisationseinheit 41 ausgegeben.

In der Überwachungseinheit 43 oder an deren Ausgang kann eine Ausschaltverzögerung integriert werden, d.h. ein Block, der beispielsweise eine logische Eins der Überwachungseinheit 43 sofort durchschaltet, eine Rückschaltung auf eine logische Null jedoch zeitverzögert vornimmt.

Das ODER-Gatter 413 der Synchronisationseinheit 41 gibt aufgrund dessen über einen Ausgang 441 ein entsprechendes Signal, beispielsweise ebenfalls eine logische Eins, an ein Steuermodul 44 aus, das dafür eingerichtet ist, das jeweils hierfür vorgesehene Schaltelement, beispielsweise das Schaltelement S6 in der Halbbrücke U, dauerhaft anzusteuern, solange über den Ausgang 441 des ODER- Gatters 413 der Synchronisationseinheit 41 ein entsprechendes Signal ausgegeben wird. Es versteht sich, dass auch weitere Signale an ein entsprechendes Schaltelement S6 und das jeweils andere Schaltelement in einer entsprechenden Halbbrücke, hier das Schaltelement S1 in der Halbbrücke U, ausgegeben werden können, beispielsweise ein getaktetes Signal, das durch eine Steuereinheit 3 im normalen Gleichrichterbetrieb bereitgestellt wird.

Liegt an dem positiven Gleichspannungsanschluss B+ des aktiven Brückengleichrichters ein Signal an, das den erwähnten oberen Schwellwert 30U überschreitet, wird über den Ausgang 432 der Überwachungseinheit 43 das Anforderungssignal, beispielsweise die logische Eins, zugleich an eine Treiberschaltung 414 der Synchronisationseinheit 41 ausgegeben. Die Treiberschaltung 414 der Synchronisationseinheit 41 bewirkt ein Schließen eines Schaltelements S41, wodurch eine über einen geeigneten Widerstand R1 anliegende Spannung, beispielsweise des positiven Gleichspannungsanschlusses B+ des aktiven Brückengleichrichters, auf Masse gezogen und hierdurch ein entsprechendes Synchronisationssignal an die Synchronisationsleitung 42 ausgegeben wird.

Liegt an dem positiven Gleichspannungsanschluss B+ des aktiven Brückengleichrichters ein Signal an, das den erwähnten oberen Schwellwert 30U nicht mehr überschreitet, wobei das Signal diesen oberen Schwellwert 30U jedoch zuvor überschritten hat, wird über einen Ausgang 432 der Überwachungseinheit 43 das Anforderungssignal, beispielsweise die logische Eins, weiterhin ausgegeben, bis das Signal an dem positiven Gleichspannungsanschluss B+ des aktiven Brückengleichrichters den unteren Schwellwert 31U unterschreitet. Sobald dies erfolgt ist, wird über den Ausgang 432 der Überwachungseinheit 43 das Anforderungssignal, beispielsweise die logische Eins, ggf. zeitverzögert, nicht mehr ausgegeben. An dem Ausgang 432 der Überwachungseinheit 43 liegt nun beispielsweise eine logische Null an. Daher wird nun mittels der Treiberschaltung 414 das Schaltelement S41 geöffnet.

Solange aber eine beliebige andere Synchronisationseinheit 41 (vgl. die identisch aufgebauten Ansteuerschaltungen 4U bis 4Y in den Figuren 1A bis 1C) ein entsprechendes Unterschreiten des unteren Schwellwerts (vgl. entsprechende Schwellwerte 31V und 31W in Figur 2) noch nicht unterschritten hat, liegt weiterhin ein Synchronisationssignal an der Synchronisationsleitung 42 bzw. dem Synchronisationsanschluss c an. Gleiches gilt, wenn die Überwachungseinheit 43 der Ansteuerschaltung 4U selbst zwar noch keine Überschreitung des oberen Schwellwerts 30U des an dem positiven Gleichspannungsanschluss B+ des aktiven Brückengleichrichters anliegenden Signals detektiert hat, aber eine entsprechende Überwachungseinheit einer anderen Ansteuerschaltung 4V bis 4Y.

Das an der Synchronisationsleitung 42 anliegende Synchronisationssignal wird beispielsweise mittels einer Empfängerschaltung 411 empfangen. Ein durch die Empfängerschaltung 411 ausgegebenes Signal kann einer Plausibilisierungsschaltung 412 zugeführt werden, die eine Plausibilisierung, wie oben erläutert, vornimmt. Ergibt die Plausibilisierung in der Plausibilisierungsschaltung 412 eine positive Plausibilität des an der Synchronisationsleitung 42 anliegenden Synchronisationssignals, wird ein entsprechendes Signal, beispielsweise wiederum in Form einer logischen Eins, an die ODER-Gatter 413 ausgegeben und auch dadurch die Ansteuerschaltung 44 zum Leitendschalten des entsprechenden ersten Schaltelements, hier S6, veranlasst. Erst wenn kein entsprechendes Signal an der Synchronisationsleitung 42 und über den Ausgang 432 mehr anliegt, wird die Beschaltung des ersten Schaltelements, hier S6, aufgehoben.

Die in der Figur 3B gezeigte Ausführungsform der Ansteuerschaltung 40 ist gegenüber der in der Figur 3A gezeigten Ausführungsform erweitert. Die in der Figur 3B gezeigte Ausführungsform bietet Vorteile, weil hiermit eine konstruktiv einfache und damit kostengünstige Überwachung durch Nutzung der bereits für die erfindungsgemäße Synchronisation bereitgestellten Hardware vorgenommen werden kann. Diese erlaubt es, Fehler in den einzelnen Halbbrücken U bis Y zugeordneten Ansteuerschaltungen 4U bis 4Y zu erkennen. Eine entsprechende Generatoranordnung wird damit diagnosefähig und erfüllt hierdurch strenge Anforderungen an die Onboard-Diagnose (OBD) und bewirkt eine höhere Systemsicherheit gemäß ISO 26262, indem eine Fehlermeldung an ein übergeordnetes System, beispielsweise die Steuereinheit 3, ausgegeben wird. Die Modularität bzw. Flexibilität des aktiven Brückengleichrichters bleibt trotzdem erhalten. Zusätzliche Funktionen wie z.B. Wakeup und Sleep (Energiesparfunktionen) können zentral angesteuert werden.

In der in der Figur 3B gezeigten Ausführungsform der Ansteuerschaltung 4U ist zusätzlich eine serielle Schnittstelle 417, beispielsweise eine LIN-Schnittstelle, zu einem entsprechenden Bussystem vorgesehen, an das beispielsweise eine Fehlerdiagnoseeinheit 45 angebunden ist. Ferner ist ein UND-Gatter 418 vorgesehen. Die Hardwarestruktur und die Verbindungen der Ansteuerschaltung 4U bleiben im Übrigen unverändert.

Die Ansteuerschaltung 4U weist dabei einen geeigneten Buscontroller 415 auf. Das UND-Gatter 418 kann nur dann ein Signal an die Treiberschaltung 414 ausgeben, wenn ein durch die Plausibilierungsschaltung 412 ausgegebenes Signal an ihrem Eingang anliegt. Dieses Signal signalisiert, dass eine an dem positiven Spannungsanschluss B+ anliegende Spannung geringer als ein Maximalwert, beispielsweise bei einem 12 V-Netz geringer als 16 V, ist.

Ein entsprechendes Signal des Buscontrollers 415 wird daher ignoriert, wenn die an dem positiven Spannungsanschluss B+ anliegende Spannung größer als dieser Maximalwert, beispielsweise 16 V, ist, so dass die Synchronisation der Ansteuerschaltungen 4U bis 4Y bei Lastabwurf nicht gestört wird. Ebenfalls schaltet die anderen Busteilnehmer die Kommunikation ab, wenn die Spannung größer als z.B. 16V ist.

Die Synchronisationsleitung 42, deren Signal auch dem Buscontroller 415 zugeführt wird, kann über letzteren mit einer vorhandenen Synchronisationsleitung eines Generatorreglers 22 gekoppelt und von einem übergeordneten System, z.B. einem Motorsteuergerät, angesteuert werden.

Die Fehlerdiagnoseeinheit 45 kann eine Fehlermeldung bereitstellen bzw. aufbereiten und diese über den entsprechenden Bus an das übergeordnete Mastersystem senden, so dass der Generatorregler 22 ggf. abgeschaltet werden kann, um einen sicheren Zustand zu erreichen.

Jeder Buscontroller 415 besitzt typischerweise drei Eingänge 416 als Vorgabe für eine Adresskodierung. Durch die Kombination der drei Eingänge, an denen jeweils eine logische Eins oder eine logische Null anliegen kann, ergeben sich 8 mögliche Teilnehmeridentifier zum Identifizieren einzelner Teilnehmer. Damit können entsprechende Ansteuereinheiten 4U bis 4Y einheitlich hergestellt werden und dennoch rückverfolgbare Fehlermeldungen ausgeben.

Da ein typischerweise verwendetes Kommunikationsprotokoll fehlertolerant ist, ist eine Kombination der erläuterten Synchronisation und des entsprechenden Bussystems möglich. Die Betriebsbereiche der beiden Funktionen sind per Definition nicht überlappend. Auch wenn spontan kurze Störungen aus den Lastabwurfsschutzfunktionen auftreten, führen diese nicht zu einem Ausfall der Buskommunikation. Alternativ kann eine Kommunikationsstruktur gewählt werden, in der ein Zentralmodul zur Kommunikation mit dem übergeordneten System und gleichzeitig als Master für die Ansteuereinheiten 4U bis 4Y eingesetzt wird. Hierdurch können weitere Störungen eliminiert werden.

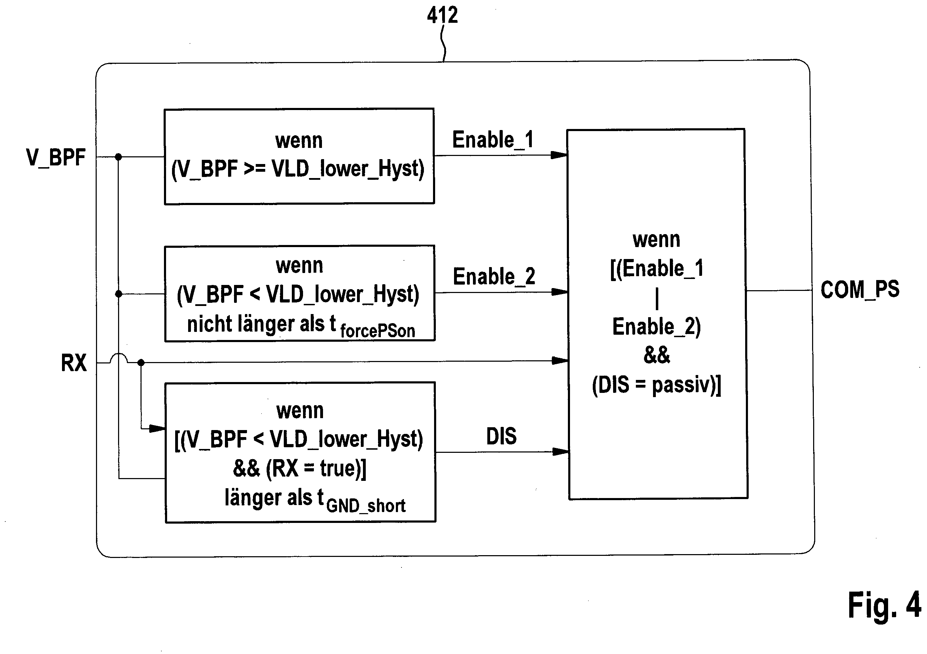

Figur 4 veranschaulicht die Funktion einer Plausibilisierungsschaltung gemäß einer Ausführungsform der Erfindung, beispielsweise der Plausibilisierungsschaltung 412 der Figuren 3A und 3B.

Ein Signal V_BPF ist hierbei ein gefiltertes Spannungssignal einer an dem positiven Gleichspannungsanschluss B+ anliegenden Spannung. RX stellt ein Signal aus einer Empfängerschaltung 411 dar. Ein Ausgangssignal COM_PS wird an das ODER-Gatter 413 weitergeleitet.

Das Signal Enable_1 wird aktiv (logische 1), wenn V_BPF den unteren Schwellwert 31U (hier mit VLD_lower_Hyst bezeichnet) überschreitet. Diese Funktion verhindert die unberechtigte Anforderung eines Phasenkurzschlusses aus der Synchronisationsleitung.

Das Signal Enable_2 wird aktiv (logische 1), wenn V_BPF den unteren Schwellwert 31U (VLD_lower_Hyst) wieder unterschreitet, dies jedoch noch nicht länger als eine definierte Zeit (z.B. 2 ms) andauert. Aufgrund dieser Funktion dürfen die als Slaves fungierenden Ansteuerschaltungen 4U bis 4Y nicht selbständig den Phasenkurzschluss ausschalten, auch wenn der untere Schwellwert in diesen Ansteuerschaltungen 4U bis 4Y bzw. den zugehörigen Überwachungseinheiten 43 selbst unterschritten ist.

Das Signal DIS wird aktiv (logische 1), wenn zwar das Signal RX der Empfängerschaltung 411 aktiv ist, aber V_BPF den unteren Schwellwert 31U (VLD_lower_Hyst) unterschreitet und dieser Zustand länger als eine definierte Zeit (z.B. 100 ms, tGND_short) gedauert hat. Damit wird ein Kurzschluss der Synchronisationsleitung nach Masse erkannt und der ungewollte Phasenkurzschluss durch den Kurzschlussfehler verboten.

Das Signal COM_PS nimmt den gleichen Wert wie das Signal RX aus der Empfängerschaltung 411 an, wenn entweder das Signal Enable_1 oder das Signal Enable_2 aktiv ist (logische 1) und das Signal DIS passiv ist (logische 0).

Die Treiberschaltung 414 umfasst vorteilhafterweise nicht nur den eigentlichen Treiber zum Schalten des Schaltelements S41, sondern auch eine Schutzfunktion. Im Fall eines dauerhaften Kurzschlusses der Synchronisationsleitung 42 zu dem positiven Gleichspannungsanschluss B+ überwacht die Treiberschaltung 414 den Fehler durch eine geeignete Schaltschwelle und einen Zeitzähler. Nach dem Eintreffen des Signals zum Einschalten des Schaltelements S41 wird der Zeitzähler gestartet. Sollte die Spannung am Ausgang des Schaltelements S41 oberhalb der Schaltschwelle liegen und ist die für den Zeitzähler definierte Zeit verstrichen, wird ein entsprechender Zustand erkannt und das Schaltelement S41 wird wieder ausgeschaltet. Hierdurch wird ein dauerhafter Hochstrom über das Schaltelement S41 verhindert und damit auch eine Überhitzung bzw. ein Ausfall des Bauelements vermieden.

Ein weiterer Vorteil der Erfindung liegt darin, dass die einzelnen Ansteuerschaltungen 4U bis 4Y zumindest die Aktion des eigenständigen Lastabwurfsschutzes individuell ungehindert durchführen, auch wenn die Synchronisationsleitung fehlerhaft ist. Beispielsweise dann, wenn eine Verbindung zwischen zwei Ansteuerschaltungen 4U bis 4Y unterbrochen ist, synchronisieren sich die dadurch aufgeteilten Gruppen individuell.

## Patentansprüche

1. Gleichrichtermodul (40) für einen aktiven Brückengleichrichter (1), das zwei zwischen zwei Endanschlüsse in Reihe geschaltete Schaltelemente (S1-S5, S6-S10), zwischen denen ein Mittelabgriff ausgebildet ist, sowie eine Ansteuerschaltung (4U-4Y) mit einer Überwachungseinheit (43), einer Synchronisationseinheit (41) und einer Ansteuereinheit (44) umfasst, wobei
• die Überwachungseinheit (43) dafür eingerichtet ist, eine Messspannung zu erfassen und ein Anforderungssignal auszugeben, wenn die Messspannung einen oberen Schwellwert (30U-30W) überschreitet,
• die Synchronisationseinheit (41) dafür eingerichtet ist, an einem Synchronisationsanschluss (c) ein Synchronisationssignal auszugeben, solange die Überwachungseinheit (43) das Anforderungssignal ausgibt, und sonst den Synchronisationsanschluss (c) auf ein Synchronisationssignal zu überwachen, und
• die Ansteuereinheit (44) dafür eingerichtet ist, eines der zwei Schaltelemente (S1-S5, S6-S10) während eines Ansteuerzeitraums zumindest abschnittsweise leitend zu schalten, wenn die Überwachungseinheit (43) das Anforderungssignal ausgibt und/oder wenn durch die Überwachung des Synchronisationsanschlusses (c) das Synchronisationssignal detektiert und optional als gültig erkannt wird, wobei das Gleichrichtermodul (40) zumindest einen Kondensator zur Versorgung der Ansteuerschaltung (4U-4Y) und/oder der Schaltelemente (S1-S5, S6-10) aufweist, wobei die Ansteuereinheit (44) dafür eingerichtet ist, das durch die Ansteuereinheit (44) leitend geschaltete eine der zwei Schaltelemente (S1-S5, S6-10) so lange nichtleitend zu schalten, bis eine an dem wenigstens einen Kondensator anliegende Spannung einen vorgegebenen Wert wieder überschreitet, wenn während des Anforderungszeitraums bestimmt wird, dass eine an dem wenigstens einen Kondensator anliegende Spannung einen vorgegebenen Wert unterschreitet.

2. Gleichrichtermodul (40) gemäß Anspruch 1, bei dem die Überwachungseinheit (43) dafür eingerichtet ist, das Ausgeben des Anforderungssignals frühestens nach Ablauf einer Mindestzeit und/oder spätestens nach Ablauf eines maximalen Anforderungszeitraums zu beenden.

3. Gleichrichtermodul (40) gemäß Anspruch 2, bei dem die Überwachungseinheit (43) dafür eingerichtet ist, das Ausgeben des Anforderungssignals vor dem Ablauf des Anforderungszeitraums zu beenden, wenn bestimmt wird, dass eine zum Laden des wenigstens einen Kondensators verwendete Spannung einen Schwellwert unterschreitet.

4. Gleichrichtermodul (40) gemäß einem der vorstehenden Ansprüche, bei dem die Überwachungseinheit (43) dafür eingerichtet ist, das Anforderungssignal so lange auszugeben, bis die Messspannung einen unteren Schwellwert (31U-31W) unterschreitet.

5. Gleichrichtermodul (40) gemäß einem der vorstehenden Ansprüche, bei dem das Synchronisationssignal nur dann als gültig erkannt wird, wenn die Messspannung gleichzeitig den unteren Schwellwert (31U - 31W) überschreitet.

6. Gleichrichtermodul (40) gemäß einem der vorstehenden Ansprüche, bei dem das Synchronisationssignal als gültig erkannt wird, solange es eine vorgegebene Maximaldauer nicht überschreitet.

7. Gleichrichtermodul (40) gemäß einem der vorstehenden Ansprüche, wobei die Ansteuerschaltung (4U - 4Y) ferner eine Fehlerdiagnoseeinheit (45) mit einer Kommunikationsschnittstelle aufweist.

8. Gleichrichtermodul (40) gemäß Anspruch 7, bei dem die Kommunikationsschnittstelle als serielle Schnittstelle zu einem Kommunikationsbus ausgebildet ist, wobei die Ansteuerschaltung (4U-4Y) einen mit einer Adresskodierung versehenen Buscontroller (415) umfasst.

9. Gleichrichtermodul (40) gemäß Anspruch 8, das dazu eingerichtet ist, die Kommunikationsschnittstelle abzuschalten, wenn die Messspannung den oberen Schwellwert (30U - 30W) überschreitet.

10. Aktiver Brückengleichrichter (1), der eine Anzahl von Wechselspannungsanschlüssen (u-y), zwei Gleichspannungsanschlüsse (B+, B-), sowie eine der Anzahl von Wechselspannungsanschlüssen (u-y) entsprechende Anzahl von Halbbrücken (U-Y) aufweist, wobei jede der Halbbrücken durch ein Gleichrichtermodul (40) gemäß einem der vorstehenden Ansprüche gebildet ist, dessen Schaltelemente (S1-S10) jeweils mit ihren Endanschlüssen in Reihe zwischen die Gleichspannungsanschlüsse (B+, B-) eingebunden sind und dessen Mittelabgriff einen Wechselspannungsanschluss (u-y) des aktiven Brückengleichrichters (1) bildet.

11. Aktiver Brückengleichrichter (1) gemäß Anspruch 10, wobei die Überwachungseinheiten (43) der Gleichrichtermodule (40) dafür eingerichtet sind, eine zwischen den zwei Gleichspannungsanschlüssen (B+, B-) anliegende Spannung als Messspannung zu erfassen.

12. Aktiver Brückengleichrichter (1) gemäß Anspruch 10 oder 11, wobei die Synchronisationsanschlüsse (b) der Synchronisationseinheiten (41) in den Gleichrichtermodulen (40) über eine Synchronisationsleitung (42) miteinander verbunden sind, so dass an den Synchronisationsanschlüssen (b) immer dann ein Synchronisationssignal anliegt, wenn von zumindest einer der Synchronisationseinheiten (41) ein Synchronisationssignal ausgegeben wird.

13. Generatoranordnung (10), die einen aktiven Brückengleichrichter (1) gemäß einem der Ansprüche 10 bis 12 und einen Generator (2) mit einem Generatorregler (22) aufweist, wobei der Generatorregler (22) über die Gleichspannungsanschlüsse (B+, B-) gespeist wird.

14. Generatoranordnung (10) gemäß Anspruch 13, die Mittel aufweist, die dafür eingerichtet sind, eine Spannungsversorgung eines Erregerfeldes des Generators (2) oder den Generator (2) zumindest für einen definierten Zeitraum abzuschalten, wenn auf der Synchronisationsleitung ein Synchronisationssignal detektiert und optional als gültig erkannt wird und/oder wenn die Messspannung den oberen Schwellwert (30U-30W) überschreitet.

15. Kraftfahrzeugbordnetz mit zumindest einer Generatoranordnung (10) gemäß Anspruch 13 oder 14.

16. Verfahren zum Betreiben eines aktiven Brückengleichrichters (1) gemäß einem der Ansprüche 10 bis 12, einer Generatoranordnung gemäß Anspruch 13 oder 14 und/oder eines Kraftfahrzeugbordnetzes (4) gemäß Anspruch 15, das umfasst, die Wechselspannungsanschlüsse (u-y) leitend miteinander zu verbinden, solange an der Synchronisationsleitung (42) ein Synchronisationssignal anliegt und optional als gültig erkannt wird.

17. Steuereinheit (3) für einen aktiven Brückengleichrichter (1) gemäß einem der Ansprüche 10 bis 12, eine Generatoranordnung nach Anspruch 13 oder 14 und/oder eines Kraftfahrzeugbordnetzes (4) gemäß Anspruch 15, die zur Durchführung eines Verfahrens nach Anspruch 16 eingerichtet ist.

18. Computerprogramm, das eine Recheneinheit, insbesondere eine Steuereinheit (3) gemäß Anspruch 17, dazu veranlasst, ein Verfahren gemäß Anspruch 16 durchzuführen, wenn es auf der Recheneinheit ausgeführt wird.

## Claims

1. A rectifier module (40) for an active bridge rectifier (1) which comprises two switching elements (S1-S5, S6-S10) which are connected in series between two end terminals and between which a center tap is formed, and a control circuit (4U-4Y) including a monitoring unit (43), a synchronization unit (41) and a control unit (44), wherein
• the monitoring unit (43) is configured to detect a measuring voltage and to output a request signal when the measuring voltage exceeds an upper threshold (30U-30W),
• the synchronization unit (41) is configured to output a synchronization signal to a synchronization terminal (c) as long as the monitoring unit (43) outputs the request signal, and otherwise to monitor the synchronization terminal (c) for a synchronization signal; and
• the control unit (44) is configured to switch one of the two switching elements (S1-S5, S6-S10) into the conductive state at least in sections during an activation period of time when the monitoring unit (43) outputs the request signal and/or when the synchronization signal is detected and is optionally recognized as valid by the monitoring of the synchronization terminal (c), the rectifier module (40) includes at least one capacitor for supplying the control circuit (4U-4Y) and/or the switching elements (S1-S5, S6-S10), wherein the control unit (44) is configured to switch the one of the two switching elements (S1-S5, S6-S10), which is switched into the conductive state by the control unit (44), to be non-conductive until a voltage applied to the at least one capacitor exceeds a predetermined value again, if it is determined during the request period of time that a voltage applied to the at least one capacitor falls below a predefined value.

2. The rectifier module (40) according to claim 1, wherein the monitoring unit (43) is configured to end the output of the request signal at the earliest after the expiration of a minimum time and/or at the latest after the expiration of a maximum request period of time.

3. The rectifier module (40) according to claim 2, wherein the monitoring unit (43) is configured to end the output of the request signal before the expiration of the request period of time if it is determined that a voltage used to charge the at least one capacitor falls below a threshold value.

4. The rectifier module (40) according to one of the preceding claims, wherein the monitoring unit (43) is configured to output the request signal until the measuring voltage falls below a lower threshold value (31U-31W).

5. The rectifier module (40) according to one of the preceding claims, wherein the synchronization signal is only recognized as valid if the measuring voltage simultaneously exceeds the lower threshold value (31U - 31W).

6. The rectifier module (40) according to one of the preceding claims, wherein the synchronization signal is recognized as valid as long as it does not exceed a predefined maximum duration.

7. The rectifier module (40) according to one of the preceding claims, wherein the control circuit (4U-4Y) includes an error diagnosis unit (45) including a communication interface.

8. The rectifier module (40) according to claim 7, wherein the communication interface includes a serial interface to a communication bus, the control circuit (4U-4Y) including a bus controller (415) provided with an address coding.

9. The rectifier module (40) according to claim 8, which is configured to turn off the communication interface if the measuring voltage exceeds the upper threshold value (30U - 30W).

10. An active bridge rectifier (1) comprising a plurality of AC terminals (u-y), two DC terminals (B+, B-), and a plurality of half-bridges (U-Y) corresponding to the plurality of AC terminals (u-y), each of the half bridges being formed by a rectifier module (40) according to one of the preceding claims, the switching elements (S1-S10) of which are each incorporated with their end terminals in series between the DC voltage terminals (B+, B-), and the center tap of which forms an AC voltage terminal (u-y) of the active bridge rectifier (1).

11. The active bridge rectifier (1) according to claim 10, wherein the monitoring units (43) of the rectifier modules (40) are configured to detect a voltage, which is applied between the two DC voltage terminals (B+, B-) as a measuring voltage.

12. The active bridge rectifier (1) according to claim 10 or 11, wherein the synchronization terminals (b) of the synchronization units (41) in the rectifier modules (40) are connected to one another via a synchronization line (42), so that a synchronization signal is always applied to the synchronization terminals (b) when a synchronization signal is output by at least one of the synchronization units (41).

13. A generator device (10) comprising an active bridge rectifier (1) according to one of the claims 10 to 12 and a generator (2) including a generator controller (22), wherein the generator controller (22) is powered via the DC voltage terminals (B+, B-).

14. The generator device (10) according to claim 13, which comprises means configured to turn off a power supply of an excitation field of the generator (2) or the generator (2) at least for a defined period of time when a synchronization signal is detected on the synchronization line and is optionally recognized as valid and/or when the measuring voltage exceeds the upper threshold value (30U-30W).

15. A motor vehicle electrical system comprising at least one generator device (10) according to claim 13 or 14.

16. A method for operating one of an active bridge rectifier (1) according to any one of claims 10 to 12, a generator device according to claim 13 or 14 and/or a motor vehicle electrical system (4) according to claim 15, the method comprises conductively connecting AC voltage terminals (u-y) to one another as long as a synchronization signal is applied to the synchronization line (42) and is optionally recognized as valid.

17. A control unit (3) for operating one of an active bridge rectifier (1) according to any one of claims 10 to 12, a generator device according to claim 13 or 14 and/or a motor vehicle electrical system (4) according to claim 15 which is configured to perform a method according to claim 16.

18. A computer program which causes a computing unit, in particular a control unit (3) according to claim 17, to perform a method according to claim 16 when it is executed on the computing unit.

## Revendications

1. Module redresseur (40) pour un redresseur en pont actif (1) incluant deux éléments de commutation (S1-S5, S6-S10) montés en série entre deux bornes d'extrémité, entre lesquels est formée une prise médiane, ainsi qu'un circuit de commande (4U-4Y) avec une unité de surveillance (43), une unité de synchronisation (41) et une unité de commande (44), dans lequel
• l'unité de surveillance (43) est configurée pour détecter une tension de mesure et générer un signal de requête lorsque la tension de mesure passe au-dessus d'une valeur de seuil supérieure (30U-30W),
• l'unité de synchronisation (41) est configurée pour générer un signal de synchronisation à une borne de synchronisation (c) tant que l'unité de surveillance (43) génère le signal de requête, et sinon pour surveiller un signal de synchronisation sur la borne de synchronisation (c), et
• l'unité de commande (44) est configurée pour commuter l'un des deux éléments de commutation (S1-S5, S6-S10) à l'état conducteur pendant une période de commande, au moins par sections, lorsque l'unité de surveillance (43) génère le signal de requête et/ou lorsque le signal de synchronisation est détecté par la surveillance de la borne de synchronisation (c) et est facultativement reconnu comme étant valide, dans lequel le module redresseur (40) comporte au moins un condensateur pour alimenter le circuit de commande (4U-4Y) et/ou les éléments de commutation (S1-S5, S6-S10), dans lequel l'unité de commande (44) est configurée pour commuter à l'état non conducteur l'un des deux éléments de commutation (S1-S5, S6-S10) commutés à l'état conducteur par l'unité de commande (44) tant qu'une tension appliquée au au moins un condensateur passe de nouveau au-dessus d'une valeur prédéfinie, lorsqu'il est déterminé pendant la période de requête qu'une tension appliquée au au moins un condensateur passe au-dessous d'une valeur prédéfinie.

2. Module redresseur (40) selon la revendication 1, dans lequel l'unité de surveillance (43) est configurée pour arrêter de générer le signal de requête au plus tôt après l'expiration d'une durée minimale et/ou au plus tard après l'expiration d'une période de requête maximale.

3. Module redresseur (40) selon la revendication 2, dans lequel l'unité de surveillance (43) est configurée pour arrêter de générer le signal de requête avant l'expiration de la période de requête lorsqu'il est déterminé qu'une tension utilisée pour charger le au moins un condensateur passe au-dessous d'une valeur de seuil.

4. Module redresseur (40) selon l'une des revendications précédentes, dans lequel l'unité de surveillance (43) est configurée pour générer le signal de requête tant que la tension de mesure passe au-dessous d'une valeur de seuil inférieure (31U-31W).

5. Module redresseur (40) selon l'une des revendications précédentes, dans lequel le signal de synchronisation est uniquement reconnu comme étant valide lorsque la tension de mesure passe en même temps au-dessus de la valeur de seuil inférieure (31U-31W).

6. Module redresseur (40) selon l'une des revendications précédentes, dans lequel le signal de synchronisation est reconnu comme étant valide tant qu'il ne passe pas au-dessus d'une durée maximale prédéfinie.

7. Module redresseur (40) selon l'une des revendications précédentes, dans lequel le circuit de commande (4U-4Y) comporte en outre une unité de diagnostic d'erreur (45) ayant une interface de communication.

8. Module redresseur (40) selon la revendication 7, dans lequel l'interface de communication est configurée comme une interface série avec un bus de communication, dans lequel le circuit de commande (4U-4Y) inclut un contrôleur de bus (415) assurant un codage d'adresse.

9. Module redresseur (40) selon la revendication 8, qui est configuré pour arrêter l'interface de communication lorsque la tension de mesure passe au-dessus de la valeur de seuil supérieure (30U-30W).

10. Redresseur en pont actif (1) comportant une pluralité de bornes de tension alternative (u-y), deux bornes de tension continue (B+, B-) ainsi qu'un nombre de demi-ponts (U-Y) correspondant au nombre de bornes de tension alternative (u-y), dans lequel chacun des demi-ponts est formé par un module redresseur (40) selon l'une des revendications précédentes, dont les éléments de commutation (S1-S10) sont respectivement intégrés avec leurs bornes d'extrémité en série entre les bornes de tension continue (B+, B-) et dont la prise médiane forme une borne de tension alternative (u-y) du redresseur en pont actif (1).

11. Redresseur en pont actif (1) selon la revendication 10, dans lequel les unités de surveillance (43) des modules redresseurs (40) sont configurées pour détecter une tension appliquée entre les deux bornes de tension continue (B+, B-) comme étant une tension de mesure.

12. Redresseur en pont actif (1) selon la revendication 10 ou 11, dans lequel les bornes de synchronisation (b) des unités de synchronisation (41) sont reliées les unes aux autres dans les modules redresseurs (40) via une ligne de synchronisation (42), de sorte qu'un signal de synchronisation est toujours appliqué aux bornes de synchronisation (b) lorsqu'un signal de synchronisation est généré par au moins une des unités de synchronisation (41).

13. Système de générateur (10) comportant un redresseur en pont actif (1) selon l'une des revendications 10 à 12 et un générateur (2) avec un contrôleur de générateur (22), dans lequel le contrôleur de générateur (22) est alimenté via les bornes de tension continue (B+, B-).

14. Système de générateur (10) selon la revendication 13, comportant des moyens configurés pour couper une alimentation électrique d'un champ d'excitation du générateur (2) ou le générateur (2) pendant au moins une période définie, lorsqu'un signal de synchronisation est détecté sur la ligne de synchronisation et est facultativement reconnu comme étant valide et/ou lorsque la tension de mesure passe au-dessus de la valeur de seuil supérieure (30U-30W).

15. Réseau de bord d'un véhicule automobile ayant au moins un système de générateur (10) selon la revendication 13 ou 14.

16. Procédé pour faire fonctionner un redresseur en pont actif (1) selon l'une des revendications 10 à 12, un système de générateur selon la revendication 13 ou 14 et/ou un réseau de bord de véhicule automobile (4) selon la revendication 15, incluant l'étape consistant à relier les unes aux autres les bornes de tension alternative (u-y) à l'état conducteur, tant qu'un signal de synchronisation est appliqué à la ligne de synchronisation (42) et est facultativement reconnu comme étant valide.

17. Unité de commande (3) pour un redresseur en pont actif (1) selon l'une des revendications 10 à 12, un système de générateur selon la revendication 13 ou 14 et/ou un réseau de bord de véhicule automobile (4) selon la revendication 15, qui est configuré pour mettre en oeuvre un procédé selon la revendication 16.

18. Programme informatique comportant une unité de calcul, en particulier une unité de commande (3) selon la revendication 17, qui permet de mettre en oeuvre un procédé selon la revendication 16 lorsqu'il est exécuté sur l'unité de calcul.
